# EUROPEAN PATENT SPECIFICATION

(11) **EP 4 513 984 B1**
(45) Date of publication and mention of the grant of the patent: **06.05.2026**
(21) Application number: 23810720.5
(22) Date of filing: 21.04.2023
(51) Int. Cl.: H04W 68/00, H04W 68/02, H04W 76/27, H04W 52/02, H04W 76/25, H04W 88/02, H04W 88/08

(54) **METHODS FOR SMALL DATA TRANSMISSION IN AN INACTIVE STATE OF A USER EQUIPMENT**
VERFAHREN ZUR KLEINDATENÜBERTRAGUNG IN EINEM INAKTIVEN ZUSTAND EINES BENUTZERGERÄTS
PROCÉDÉS DE TRANSMISSION DE DONNÉES DE PETITE TAILLE DANS UN ÉTAT INACTIF D'UN ÉQUIPEMENT UTILISATEUR

(30) Priority: 24.05.2022 CN 202210573972
(43) Date of publication of application: 26.02.2025
(73) Proprietor: Honor Device Co., Ltd., Shenzhen, Guangdong 518040 (CN)
(72) Inventor: ZHANG, Jian, Shenzhen, Guangdong 518040 (CN)
(74) Representative: Isarpatent
(86) International application number: PCT/CN2023/089727
(87) International publication number: WO 2023/226646

(56) References cited:
- WO-A1-2021/228197
- WO-A1-2022/087275
- WO-A1-2022/087275
- CN-A- 107 295 638
- CN-A- 110 475 320
- CN-A- 114 126 012

## Description

### CROSS-REFERENCE TO RELATED APPLICATIONS

Priority is claimed to Chinese Patent No. 202210573972.4, filed with the China National Intellectual Property Administration on May 24, 2022 and entitled "DATA TRANSMISSION METHOD AND RELATED DEVICE".

### TECHNICAL FIELD

This disclosure generally relates to the field of communication technologies, and the invention specifically, relates to methods for small data transmission.

### BACKGROUND

In a 5th-generation (5G) new radio (NR) network, to improve efficiency of frequent transmission of a small data packet, a radio resource control (RRC) state is introduced: an RRC inactive (Inactive) state.

When user equipment (UE) is in the RRC inactive state, if a gNB sends a downlink data packet or signaling to the user equipment, the user equipment needs to migrate from the RRC inactive state to an RRC connected state to receive the downlink data packet or signaling. In addition, after the user equipment successfully receives the data sent by the gNB, the user equipment subsequently switches from the RRC connected state to the RRC inactive state. Because the gNB sends the downlink data packet or signaling to the user equipment relatively frequently, the user equipment needs to frequently migrate between the RRC inactive state and the RRC connected state, and consequently, signaling overheads are relatively high, which increases power consumption of the user equipment. Moreover, if the user equipment remains in the RRC connected state after the user equipment successfully receives the data sent by the gNB, if a service frequency is not high, for example, a period in which the gNB sends the downlink data packet to the user equipment is very long, the user remains in the RRC connected state for a long time, resulting in excessively large power consumption of the user equipment.

WO 2022/087275 A1 discloses a small data transmission (SDT) procedure that considers transmission of a RRC resume request message (for the SDT procedure), by the UE, to the base station as a response to the paging message.

WO 2021/228197 A1 discloses a method which considers reception of a dedicated control signaling related to one NUL and SUL frequency carrier and performing only uplink data transmission by the UE which is in a RRC_INACTIVE state.

### SUMMARY

The object of the invention is to provide a data transmission method, to resolve a problem that signaling overheads of user equipment are relatively high due to frequent transmission of a small data packet. This object is solved by the attached independent claims and further embodiments and improvements of the invention are listed in the attached dependent claims.

### BRIEF DESCRIPTION OF DRAWINGS

FIG. 1 is a flowchart of a data transmission method;
FIG. 2 is a flowchart of another data transmission method;
FIG. 3 is a flowchart of a data transmission method according to an implementation of this application;
FIG. 4 is a schematic flowchart of an information exchange scenario in a data transmission method according to another implementation of this application;
FIG. 5 is a schematic flowchart of an information exchange scenario in a data transmission method according to another implementation of this application;
FIG. 6 is a schematic flowchart of an information exchange scenario in a data transmission method according to another implementation of this application;
FIG. 7 is a schematic flowchart of an information exchange scenario in a data transmission method according to another implementation of this application;
FIG. 8 is a schematic flowchart of an information exchange scenario in a data transmission method according to another implementation of this application;
FIG. 9 is a schematic flowchart of an information exchange scenario in a data transmission method according to another implementation of this application;
FIG. 10 is a schematic diagram of a structure of a network device according to an implementation of this application; and
FIG. 11 is a schematic diagram of a structure of user equipment according to an implementation of this application.

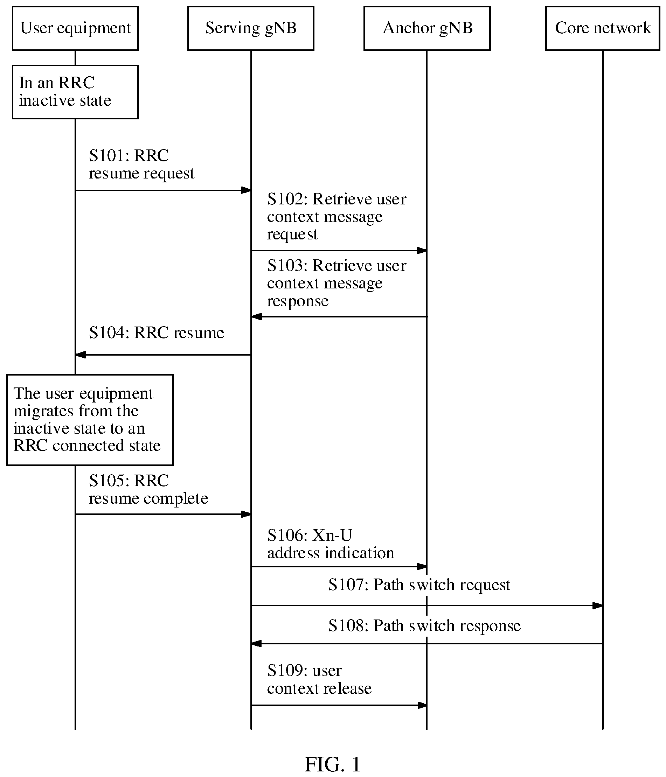

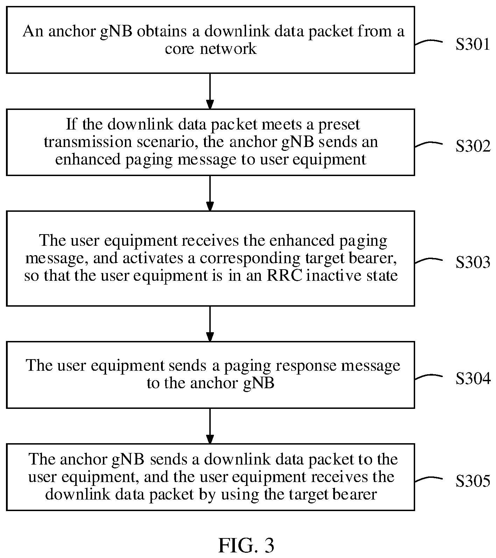

The implementation depicted in figure 3 and the corresponding description are according to the claimed invention. The embodiments/examples/implementations depicted in figures 1-2 and 4-11 and their description are not or not completely covered by the claimed invention and are for illustration purposes only.

### DESCRIPTION OF EMBODIMENTS

It should be noted that in the embodiments of this application, "at least one" means one or more, and "a plurality of" means two or more. "And/or" describes an association relationship between associated objects, and indicates that three relationships may exist. For example, "A and/or B" may indicate the following cases: only A exists, both A and B exist, and only B exists, where A and B may be singular or plural. The terms "first", "second", "third", "fourth" and the like (if they exist) in the specification, claims, and accompanying drawings of this application are used to distinguish between similar objects, and are not used to describe a specific order or sequence.

In addition, it should be noted that, the method disclosed in the embodiments of this application or the method shown in the flowchart includes one or more steps used to implement the method.

In the following, some terms in the embodiments of this application are explained and described to facilitate understanding by a person skilled in the art.

### 1. User Equipment (User Equipment, UE)

The user equipment may also be referred to as a mobile terminal (Mobile Terminal), mobile user equipment, or the like, and may communicate with one or more core networks through a radio access network (Radio Access Network, RAN).

### 2. Network device

The network device is a device that is deployed in a radio access network and that provides a wireless communication function for user equipment. The network device may include a base station, and the base station may include a macro base station, a micro base station, a relay station, an access point base station controller, a transmission and reception point (Transmission and Reception Point, TRP), and the like. In different networks, the base station has different specific names. For example, in a long term evolution (Long Term Evolution, LTE) network, the base station is referred to as an evolved NodeB (Evolved NodeB, eNB), and in a subsequent evolved system, the base station may also be referred to as a new radio NodeB (New Radio NodeB, gNB). In this specification, the gNB may serve as a serving gNB (Serving gNB) and/or an anchor gNB (Anchor gNB). The serving gNB is a gNB that currently serves the user equipment, and the anchor gNB is a gNB that serves the user equipment last time.

### 3. Radio access network (Radio Access Network, RAN) based notification area (RAN based Notification Area, RNA)

The radio access network based notification area is also referred to as a radio access network notification area (RNA), and may include one or more cells. If the RNA includes a plurality of cells, the plurality of cells may be cells controlled by one or more base stations (for example, eNB and/or gNB).

### 4. Core network (Core Network, CN)

User equipment performs data transmission with the core network by using a network device, for example, performs data transmission with an access and mobility management function (Access and Mobility Management Function, AMF) or a user plane function (User Plane Function, UPF) of the core network.

### 5. Radio resource control (Radio Resource Control, RRC) state

In a 5G network architecture (service-based architecture, SBA), network functions and entities mainly include: user equipment (UE), an access network (access network, AN) or a radio access network (RAN), a user plane function (UPF), a data network (data network, DN), an access management function (AMF), a session management function (session management function, SMF), an authentication server function (authentication server function, AUSF), a policy control function (policy control function, PCF), an application function (application function, AF), a network slice selection function (network slice selection function, NSSF), unified data management (unified data management, UDM) function, a network exposure function (network exposure function, NEF), and a network repository function (network repository function, NRF).

A network function can be used as a network element running on dedicated hardware, or a software instance running on dedicated hardware, or a virtual function instantiated on an appropriate platform, for example, implemented on a cloud infrastructure.

The following specifically describes main functions of some network elements.

AN/RAN: The AN/RAN may include various forms of network devices. The AN/RAN is mainly responsible for functions such as radio resource management on an air interface side, uplink and downlink data classification, quality of service (quality of service, QoS) management, data compression and encryption, and completion of signaling processing with a control plane network element or completion of data forwarding with a user plane function network element. A specific form and structure of the AN/RAN are not limited in the embodiments of this application.

UPF: The UPF is mainly responsible for packet routing and forwarding, QoS processing of user plane data, collection of statistics about charging information, and the like. A transmission resource and a scheduling function in the UPF that are for providing a service to UE are managed and controlled by the SMF.

DN: The DN is a network used for transmitting data. For example, the DN may be an operator service network, an internet access network, or a third-party service network.

In a 5G network, user equipment has three RRC states: an RRC connected state, an RRC idle state, and an RRC inactive state. The three RRC states may be switched to each other. In this specification, conversion between the three RRC states may also be referred to as "state switching" or "state migration".

The RRC connected (Connected) state may also be referred to as a connected state for short. In this specification, the "connected state" and the "RRC connected state" are same concepts. When the user equipment is in the connected state, the user equipment establishes an RRC connection to a network, and may perform data transmission.

The RRC idle (Idle) state or may be referred to as an idle state for short. In this specification, the "idle state" and the "RRC idle state" are same concepts. When the user equipment is in the idle state, the user equipment does not establish an RRC connection to a network, and a gNB does not store context (Context) of the user equipment. If the user equipment needs to enter the RRC connected state from the RRC idle state, the user equipment needs to initiate an RRC connection establishment process.

The RRC inactive (Inactive) state may also be referred to as an inactive state for short. In this specification, the "inactive state" and the "RRC inactive state" are same concepts. When the user equipment is in the inactive state, because the user equipment previously enters the RRC connected state in an anchor gNB, the anchor gNB releases the RRC connection, but the anchor gNB stores the context of the user equipment. If the user equipment needs to enter the RRC connected state again from the RRC inactive state, the user equipment needs to initiate an RRC connection resume process at a serving gNB, which is referred to as an RRC connection reestablishment process. Because the user equipment may be moving, the serving gNB and the anchor gNB may be a same gNB, or may be different gNBs.

### 6. Small data transmission (Small Data Transmission, SDT)

In the embodiments of this application, a data packet whose data amount is less than a preset data amount threshold may be referred to as a small data packet. In a conventional communication network, user equipment in an idle state or an inactive state needs to first perform transmission of a plurality of pieces of control signaling with a base station before entering a connected state, and then can perform data or signaling transmission with the base station. However, in a communication network such as machine type communication (Machine Type Communication, MTC), the user equipment frequently sends some small data packets to the base station. As a result, the user equipment in the idle state or the inactive state needs to frequently switch to the connected state, causing a large quantity of signaling overheads, and increasing power consumption of the base station.

In this case, currently, there is a method in which the user equipment can perform data transmission without entering the connected state, that is, a small data transmission (Small Data Transmission, SDT) manner. The small data transmission manner means that after determining that a to-be-transmitted data packet is a small data packet, the user equipment integrates the small data packet into some control signaling, and then transmits the small data packet to the base station by using the control signaling. Alternatively, the user equipment transmits the small data packet to the base station by using context stored in the user equipment. The small data transmission manner may include an early data transmission (Early Data Transmission, EDT) manner, a two-step random access manner, a pre-configured uplink resource (Pre-Configured Uplink Resource, PUR) manner, and the like.

### 7. Mobile Terminated (MT)

Mobile terminated is a mobile message that is routed from a core network device (such as an AMF) or a network device (such as a base station) and that is sent to user equipment. Mobile terminated also refers to a voice call terminated on the user equipment from another mobile user, a public switched telephone network (Public Switch Telephone Network, PSTN), or another network.

The term "terminated" means that transfer of a message is terminated on the user equipment. The term also describes communication between a short message service center (Short Message Service Center, SMSC) and the user equipment, and between a mobile switching center (Mobile Switching Center, MSC) and the user equipment.

### 8. Mobile-terminated small data transmission (Mobile Terminated-Small Data Transmission, MT-SDT)

MT-SDT refers to a manner of small data transmission terminated on user equipment, which is also referred to as mobile-terminated small data transmission. When receiving downlink data and/or signaling from a network device in the MT-SDT manner, the user equipment may not switch to an RRC connected state to reduce signaling overheads and UE power consumption, and allows fast transmission of a small data packet (for example, a small data packet used for positioning) to reduce a delay.

MT-SDT corresponds to mobile originating-small data transmission (Mobile Originating-Small Data Transmission, MO-SDT), which is also referred to as mobile originating-small data transmission. MO-SDT refers to a manner of small data transmission initiated by user equipment. When sending uplink data and/or signaling to a network device in the MO-SDT manner, the user equipment may transmit a small data packet in an RRC inactive state, thereby reducing signaling overheads and UE power consumption.

### 9. User equipment context (UE Context)

In a communication process between user equipment and a network device, the network device creates a record for the user equipment, which is referred to as user equipment context (UE Context).

The user equipment context is used to store device information of the user equipment, for example, a mobile number, a device number, an IP address, and a quality of service (Quality of Service, QoS) parameter. The user equipment context is used to maintain a communication connection to the user equipment and service processing for the user equipment in the communication process. In this specification, the "user equipment context (UE Context)" is referred to as "context (context)" for short.

### 10. Radio bearer (Radio Bearer, RB)

The radio bearer includes a data radio bearer (Data Radio Bearer, DRB) and a signaling radio bearer (Signaling Radio Bearer, SRB), a DRB type includes a DRB1, a DRB2, and the like, and an SRB type includes an SRB1, an SRB2, and the like.

### 11. Radio access network-based paging (RAN-based Paging)

The radio access network-based paging refers to paging (Paging) initiated by a network device in a radio access network notification area (RNA), to determine a cell in which user equipment is located. When receiving downlink data/signaling from a core network, the network device triggers a radio access network paging (RAN Paging) message. In this specification, "RAN-based Paging", "RAN Paging", and "Paging" are same concepts.

### 12. Xn interface

The Xn interface refers to an interface for data transmission between two gNBs, for example, data transmission is performed between a serving gNB and an anchor gNB by using the Xn interface. The Xn interface may include but is not limited to a user plane interface Xn-U, a control plane interface Xn-C, and the like. The user plane interface Xn-U mainly provides a data forwarding function and a traffic control function. The control plane interface Xn-C mainly provides functions such as Xn interface management, UE mobility management, and dual connectivity implementation.

### 13. NG interface

The NG interface refers to an interface for data transmission between a radio access network and a core network. The NG interface may include but is not limited to a user plane interface NG-U, a control plane interface NG-C, and the like. The user plane interface NG-U is an interface between the radio access network and a user plane function (UPF) of the core network. The control plane interface NG-C is an interface between the radio access network and a control plane function (AMF) of the core network.

It should be noted that, user equipment (UE) switches from an RRC connected state to an RRC inactive state under a service of an anchor gNB (Anchor gNB), and the anchor gNB stores information about user equipment context (UE Context). The user equipment context is the same as user equipment context in the RRC connected state or is a part of the user equipment context in the RRC connected state. Subsequently, that the user equipment in the RRC inactive state moves in a radio access network (Radio Access Network, RAN) based notification area (RAN based Notification Area, RNA) includes the following two scenarios.

Scenario 1: The user equipment enters a serving range of a serving gNB (Serving gNB), and the user equipment receives a broadcast signal from the serving gNB, and performs data transmission with a core network by using the serving gNB. When the anchor gNB receives a downlink data packet/signaling from the core network, the anchor gNB triggers a radio access network paging (RAN Paging) message. When receiving no response from the user equipment for the paging message broadcast by the anchor gNB in a serving range of the anchor gNB, the anchor gNB sends the paging message to the serving gNB, and the serving gNB continues to broadcast the paging message. When receiving a response message from the user equipment, the serving gNB may determine that the user equipment is currently in the serving range of the serving gNB. Therefore, the anchor gNB needs to forward the downlink data packet/signaling to the user equipment by using the serving gNB.

Scenario 2: The user equipment is still in the serving range of the anchor gNB, and the user equipment continues to receive the broadcast signal from the anchor gNB, and performs data transmission with the core network by using the anchor gNB. In other words, the anchor gNB and the serving gNB are a same gNB. When the anchor gNB receives a downlink data packet/signaling from the core network, the anchor gNB triggers a radio access network paging (RAN Paging) message. When receiving a response message from the user equipment, the anchor gNB may determine that the user equipment is currently in the serving range of the anchor gNB. In this case, the anchor gNB may directly send the downlink data packet/signaling to the user equipment.

It may be understood that a difference between Scenario 1 and Scenario 2 lies in the following: In scenario 1, the anchor gNB needs to forward the downlink data packet/signaling by using the serving gNB when sending the downlink data packet/signaling to the user equipment. In scenario 2, the anchor gNB and the serving gNB are a same gNB, and therefore, the anchor gNB may directly send the downlink data packet/signaling to the user equipment.

It may be understood that a 5G new radio (New Radio, NR) network includes a connected state and an idle state. To improve efficiency of frequent transmission of a small data packet, an RRC inactive state is introduced into the 5G NR network.

A gNB sends, to user equipment (UE) in the connected state, an RRC release (Release) message that carries a suspend (Suspend) configuration to indicate the UE to enter the RRC inactive state. When the UE is in the RRC inactive state, context (Context) information of the UE is suspended on both a terminal side and a gNB side. When the UE needs to send data/signaling, the UE triggers an RRC resume request (Resume Request) procedure, so that the UE switches from the RRC inactive state to the RRC connected state and then can send the data/signaling.

For example, FIG. 1 is a schematic diagram in which when UE needs to send data and/or signaling to a network side, the UE moves from an RRC inactive state to an RRC connected state.

As shown in FIG. 1, it may be understood that, when the UE is in the RRC inactive state, if the UE needs to send data/signaling to a network device, the user equipment (UE) sends an RRC resume request (RRC Resume Request) message to a serving gNB, to request to resume to the RRC connected state (refer to S101).

The serving gNB sends a retrieve UE context request (Retrieve UE Context Request) message to an anchor gNB to obtain user context information (UE Context) (refer to S102).

In response to the retrieve user context request message, the anchor gNB sends a retrieve user context response (Retrieve UE Context Response) message to the serving gNB, where the user context response message carries the user context information (refer to S103).

After obtaining the context information, the serving gNB sends an RRC resume (RRC Resume) message to the user equipment, to indicate the user equipment to resume to the RRC connected state (refer to S104).

After resuming from the RRC inactive state to the RRC connected state, the user equipment sends an RRC resume complete (RRC Resume Complete) message to the serving gNB, to notify the serving gNB that the user equipment has resumed to the RRC connected state (refer to S105).

The serving gNB sends an Xn-U address indication (Xn-U Address Indication) message to the anchor gNB, where the Xn-U address indication message carries a data forwarding address (refer to S106). The serving gNB provides the data forwarding address to the anchor gNB, to prevent a downlink data packet buffered in the anchor gNB from being lost in a data transmission process.

The serving gNB sends a path switch request (Path Switch Request) message to a core network (such as an AMF), to request to switch an endpoint of a downlink of an NG interface transport bearer to a new endpoint (refer to S107).

In response to the path switch request, the core network sends a path switch response (Path Switch Response) message to the serving gNB (refer to S108), to notify the serving gNB that the downlink of the NG interface transport bearer has been switched to the new endpoint (refer to S108).

The serving gNB sends a user equipment context release (UE Context Release) message to the anchor gNB, to indicate the anchor gNB to release the context information buffered in the anchor gNB (refer to S109).

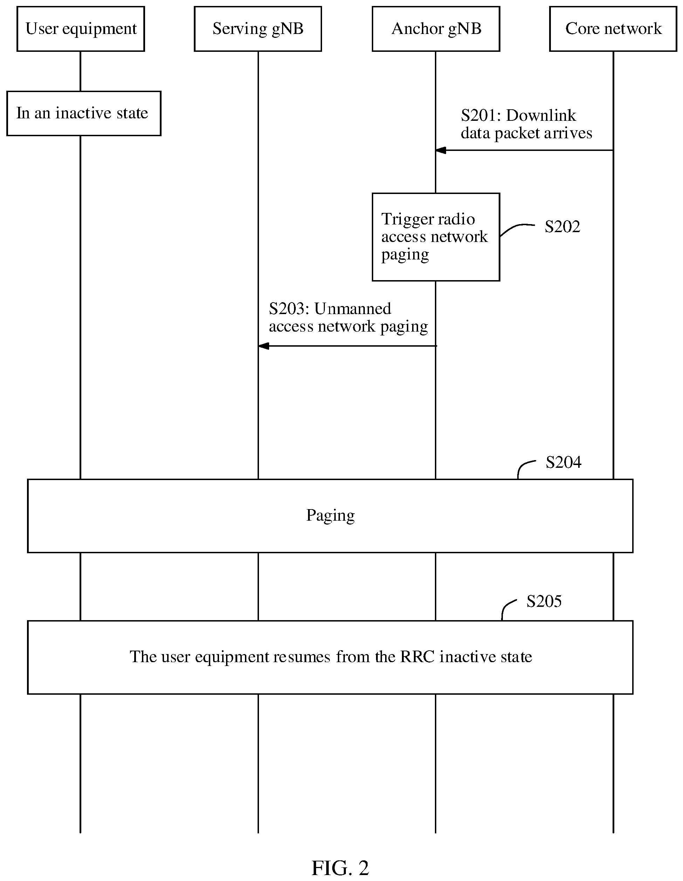

For another example, referring to FIG. 2, FIG. 2 is another schematic diagram in which UE migrating from an RRC inactive state to an RRC connected state when data and/or signaling need/needs to be sent.

As shown in FIG. 2, it may be understood that, when the UE is in the RRC inactive state, if an anchor gNB receives a downlink data packet/signaling from a core network (refer to S201), the anchor gNB pages the user equipment in a radio access network-based notification area (RAN-based Notification Area, RNA), and may directly send a paging (Paging) message to the user equipment, or may forward the paging message to the user equipment by using a serving gNB. For example, the anchor gNB sends a radio access network paging (RAN Paging) message to the serving gNB, to indicate the serving gNB to page the user equipment in the radio access network-based notification area (RNA) (refer to S202-S203). The serving gNB pages the user equipment (Paging UE) over an air interface by using an inactive radio network temporary identity (Inactive Radio Network Temporary Identity, I-RNTI) (refer to S204). When the user equipment is successfully paged, the user equipment triggers an RRC resume request procedure (refer to S101-S109 in FIG. 1) to resume from the RRC inactive state (Resume from RRC Inactive State) to the RRC connected state, and then receives the downlink data packet/signaling.

After the user equipment successfully receives the downlink data packet/signaling, the serving gNB sends a context release message to the user equipment, and the user equipment migrates from the RRC connected state to the RRC inactive state again. As shown in FIG. 1 and FIG. 2, if data/signaling is transmitted frequently, the user equipment frequently performs state migration, causing an excessively large proportion of signaling overheads.

Based on this, this application provides a data transmission method, to support a mobile terminated-small data transmission (Mobile Terminated-Small Data Transmission, MT-SDT) function, and indicate user equipment to receive a downlink data packet in an RRC inactive state, thereby reducing signaling overheads caused by state migration of the user equipment, reducing an amount of signaling between interfaces of a serving gNB and an anchor gNB, and reducing a service delay.

It may be understood that, for ease of description, the following clearly describes the technical solutions in the embodiments of this application with reference to the accompanying drawings in the embodiments of this application. Specifically, as shown in FIG. 2, FIG. 2 is a flowchart of a data transmission method according to an implementation of this application.

When user equipment in an RRC inactive state enters a serving range of a serving gNB, referring to FIG. 3, the data transmission method includes the following steps:
S301: An anchor gNB obtains a downlink data packet from a core network.

The downlink data packet may be downlink data (Downlink Data) or downlink signaling (Downlink Signaling).

Optionally, the downlink data packet may carry assistance information, radio bearer (Radio Bearer, RB) information, a data packet size, and the like. The assistance information is used to indicate data that needs to be transmitted. The assistance information may include subscription data, a capability, data transmission statistics information, a data/signaling service feature, and indication information of the UE that are related to SDT. The data service feature may include a frequency of a single data packet/multi-data packet, duration of a session, and a data amount in a session. The signaling service feature may include a signaling frequency and a signaling data packet size.

Optionally, the downlink data packet may further carry indication information to indicate triggering of MT-SDT data transmission.

S302: If the downlink data packet meets a preset transmission scenario, the anchor gNB sends an enhanced paging message to the user equipment.

If the downlink data packet meets the preset transmission scenario, it indicates that the data can be transmitted to the user equipment by using an MT-SDT method.

In an embodiment, the downlink data packet sent by the core network carries the indication information. The anchor gNB may determine, based on the indication information, whether MT-SDT data transmission can be triggered for the downlink data, that is, whether the data can be transmitted to the user equipment by using the MT-SDT method. If yes, it is determined that the downlink data packet meets the preset transmission scenario; or if no, it is determined that the downlink data packet does not meet the preset transmission scenario, and the user equipment needs to be indicated to establish a connection to the anchor gNB, so that the user equipment enters a connected state to receive the downlink data packet.

In an embodiment, the downlink data packet sent by the core network carries the assistance information. The anchor gNB may determine, based on the assistance information, whether MT-SDT data transmission can be triggered for the downlink data, that is, whether the data can be transmitted to the user equipment by using the MT-SDT method. If yes, it is determined that the downlink data packet meets the preset transmission scenario.

In an embodiment, if the anchor gNB determines that the downlink data packet sent by the core network is a small data packet, the anchor gNB may determine that the downlink data packet meets the preset transmission scenario.

In an embodiment, the anchor gNB stores an MT-SDT list, and the MT-SDT list records at least one downlink data packet. The anchor gNB determines whether the received downlink data packet delivered by the core network is recorded in the MT-SDT list, and if yes, determines that the downlink data packet meets the preset transmission scenario.

S303: The user equipment receives the enhanced paging message, and activates a corresponding target bearer, so that the user equipment is in the RRC inactive state.

In an embodiment, the enhanced paging message carries an MT-SDT indication parameter, and the user equipment activates, based on the MT-SDT indication parameter, a bearer configured with a small data transmission capability.

Further, the enhanced paging message further carries a bearer identity, and the user equipment activates the corresponding target bearer based on the bearer identity.

The bearer identity is used to identify a target bearer that needs to be activated by the user equipment.

Optionally, the user equipment further determines, based on the enhanced paging message, that sending of an RRC resume request message to the anchor gNB does not need to be triggered, so that the user equipment keeps in the RRC inactive state and does not enter the connected state.

S304: The user equipment sends a paging response message to the anchor gNB.

Optionally, if an uplink resource configured for the UE is valid, the UE sends an RRC resume request message to the anchor gNB, where the RRC resume request message carries an MT access cause value, and the RRC resume request message is used as the paging response message.

Optionally, if the UE triggers an uplink random access procedure, the UE responds to the RRC resume request message in an Msg3 message, where the RRC resume request message carries the MT access cause value, and the RRC resume request message is used as the paging response message.

The MT access cause value is used to indicate a reason for the user equipment to respond to the paging message based on the RRC resume request message. For example, the user equipment sends the RRC resume request message only in response to the paging message, but a state of the user equipment does not migrate from the RRC inactive state to the RRC connected state.

It may be understood that in another embodiment, not covered by the claimed invention, the user equipment may send another message to the anchor gNB as the paging response message, to notify the anchor gNB that the user equipment successfully receives the paging message.

S305: The anchor gNB sends the downlink data packet to the user equipment, and the user equipment receives the downlink data packet by using the target bearer.

In this way, when receiving the downlink data packet sent to the user equipment by the core network, the anchor gNB in this application first determines whether the downlink data packet supports transmission in the MT-SDT manner. If the downlink data packet supports transmission in the MT-SDT manner, the anchor gNB sends the enhanced paging message to the user equipment, so that the user equipment receives the downlink data packet in the RRC inactive state. Because the user equipment can receive the downlink data packet in the RRC inactive state without migrating to the connected state, signaling overheads for establishing an RRC connection to the anchor gNB are reduced, and power consumption of the user equipment is reduced.

The following specifically describes the data transmission method in this application by using specific embodiments.

### Embodiment 1

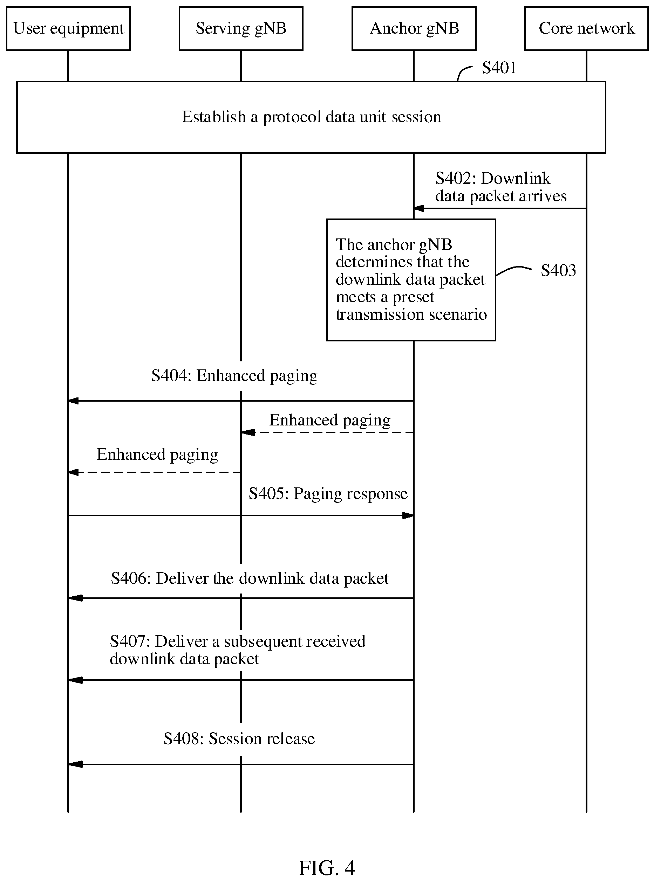

Referring to FIG. 4, the data transmission method may include the following steps:
S401: Establish a protocol data unit session (Protocol Data Unit session, PDU session).

The PDU session (also referred to as a PDU session) is established to implement data transmission between UE and a network device.

When the PDU session is established, a core network side delivers assistance information corresponding to UE to an anchor gNB. The assistance information may be determined by the core network side based on subscription data, a capability, a data transmission statistics parameter, and the like that are of the UE.

The assistance information may include: an MT-SDT identifier, where the MT-SDT identifier is used to identify whether a type of the PDU session supports MT-SDT.

Certainly, the assistance information may further include other information, for example, a data service feature of the PDU session. The data service feature may include a parameter such as a frequency of a single data packet, a frequency of a multi-data packet, duration of a session, and a data amount in a session.

The anchor gNB may determine, based on a capability of the anchor gNB and the capability of the UE, whether to configure an MT-SDT transmission capability when a bearer is activated.

Further, the core network side may further deliver an MT-SDT list to the anchor gNB, where the MT-SDT list records at least one downlink data packet, and the anchor gNB receives the MT-SDT list and stores the MT-SDT list locally.

When the anchor gNB receives a message sent by the core network side, the anchor gNB determines whether the message is in the MT-SDT list. If the message is in the MT-SDT list, the message meets a preset transmission scenario, and may be transmitted in an MT-SDT manner provided in this application. If the message is not in the MT-SDT list, the anchor gNB sends the message as a common message.

For example, the MT-SDT list may include positioning information. When the core network side delivers positioning information of the user equipment to the anchor gNB, if the anchor gNB determines that the positioning information is located in the MT-SDT list, the anchor gNB determines that transmission of the positioning information meets the preset transmission scenario.

In some embodiments, for a downlink data packet that cannot be parsed by the anchor gNB, for example, the anchor gNB cannot determine a type of the downlink data packet, when the core network side delivers the downlink data packet to the anchor gNB, the downlink data packet may carry indication information. The anchor gNB determines, based on the indication information corresponding to the downlink data packet, whether the downlink data packet meets the preset transmission scenario.

S402: A downlink data packet sent, to the user equipment, by the core network side to the anchor gNB arrives.

S403: The anchor gNB determines that the downlink data packet meets the preset transmission scenario.

It may be understood that, in this embodiment of this application, an implementation process of S403 may be, for example, but is not limited to the following description:
In an embodiment, after receiving the downlink data packet sent by the core network, the anchor gNB obtains a size of the downlink data packet, and then determines whether the size of the downlink data packet is greater than a threshold. If the size of the downlink data packet is less than the threshold, the downlink data packet meets the preset transmission scenario; or if the size of the data packet is greater than or equal to the threshold, the downlink data packet does not meet the preset transmission scenario.

In this way, the anchor gNB determines, only based on the size of the downlink data packet, whether the downlink data packet meets the preset transmission scenario. When the size of the small data packet is less than the threshold, the anchor gNB determines that the downlink data packet meets the preset transmission scenario.

The threshold may be configured by the core network side on a gNB side. For example, the core network side configures the threshold for the anchor gNB when the PDU session is established. Certainly, in another embodiment, the threshold may be determined through negotiation between the anchor gNB and the user equipment. For example, when the user equipment establishes a connection to the anchor gNB, the anchor gNB determines the threshold based on capability information of the UE.

In an embodiment, the downlink data packet delivered by the core network side carries indication information. After receiving the downlink data packet sent by the core network, the anchor gNB obtains indication information corresponding to the downlink data packet, where the indication information is used to indicate whether the downlink data packet meets the preset transmission scenario.

In an embodiment, the downlink data packet sent by the core network carries assistance information. After receiving the data packet sent by the core network, the anchor gNB determines, based on the assistance information, whether the downlink data packet meets the preset transmission scenario.

Specifically, the assistance information includes identification information and service feature information. The identification information is used to identify whether the data packet or the PDU session supports MT-SDT transmission, and the service feature information is used to indicate a feature of a data packet transmitted through the PDU session, for example, whether the data packet is a single data packet. If the data packet is not a single data packet and is a multi-data packet, a frequency of the multi-data packet is determined. Certainly, the service feature information further includes parameters such as duration of a PDU session and a data packet quantity or size in time supported by the PDU session.

For example, the anchor gNB receives the downlink data packet sent by the core network, and the anchor gNB determines, based on the identification information, whether the downlink data packet is a small data packet. If the downlink data packet is not a small data packet, the anchor gNB transmits the downlink data packet as a common data packet (to be specific, an RRC connection is established, so that the UE enters an RRC connected state). If the downlink data packet is a small data packet, the anchor gNB determines, based on the service feature information, whether the downlink data packet is a single data packet. If the downlink data packet is a single data packet, the anchor gNB determines that the downlink data packet meets the preset transmission scenario; or if the downlink data packet is a multi-data packet, the anchor gNB obtains a frequency of the multi-data packet. If the frequency is less than a preset frequency threshold, the anchor gNB determines that the downlink data packet meets the preset transmission scenario; otherwise, the anchor gNB determines that the downlink data packet does not meet the preset transmission scenario.

S404: The anchor gNB sends an enhanced paging message to the user equipment.

The enhanced paging message carries MT-SDT indication information, and the MT-SDT indication information is used to indicate that downlink data packet transmission triggered by using the paging message meets the preset transmission scenario. The user equipment may receive the downlink data packet in an RRC inactive state.

The enhanced paging message may be a RAN-paging message.

Optionally, the paging message may further carry a bearer identity, such as an RB ID, a DRB1, a DRB2, or an SRB2. When receiving the paging message, the user equipment may activate a corresponding target bearer based on the bearer identity, so that the user equipment can receive, in the RRC inactive state by using the bearer, the downlink data packet sent by the anchor gNB.

Optionally, the paging message may further carry a dedicated sequence, such as a Preamble code.

Further, if the UE is located in an area covered by the anchor gNB, step S404 may be omitted. Therefore, the anchor gNB directly sends a paging message to the UE.

Optionally, the following steps may be further included: The anchor gNB triggers a RAN-paging. Because the UE is in an area covered by a serving gNB, the UE does not receive paging from the anchor gNB. The anchor gNB pages the UE and obtains no paging response sent by the UE. When the anchor gNB obtains no paging response, the anchor gNB sends a paging message to the serving gNB, to request, by using the paging, the serving gNB to assist in paging the UE.

S405: After receiving the paging message, the user equipment sends a paging response message to the anchor gNB.

The paging response message may be an RRC resume request (RRC Resume Request) message. Certainly, in another embodiment, the paging response message may alternatively be another message.

Specifically, the user equipment activates the corresponding target bearer based on the paging message and is in the RRC inactive state. The target bearer may be a data bearer or a signaling bearer. The target bearer may be only used to receive a downlink data packet, or may be used to receive a downlink data packet and send an uplink data packet to a gNB side.

In an embodiment, the paging message carries the bearer identity. The UE activates the corresponding target bearer based on the bearer identity, that is, the target bearer corresponding to the bearer identity is resumed from a suspended state to a data receiving state, where the target bearer is a DRB or an SRB identified by the bearer identity.

Further, if the paging message does not carry the bearer identity, the UE activates all bearers that are configured with a small data transmission capability.

In an embodiment, if an uplink resource configured for the UE is valid, the UE directly responds with the RRC resume request (RRC Resume Request) message, where the RRC Resume Request message carries a small data transmission access cause value as the paging response message, for example, the small data transmission access cause value may be an MT access cause value.

In an embodiment, the UE triggers an uplink random access procedure, and responds with the RRC resume request (RRC Resume Request) message in an Msg3 message in random access, where the RRC Resume Request message carries a small data transmission access cause value as the paging response message.

In an embodiment, after sending the paging response message to the serving gNB, the user equipment starts a small data transmission timer (SDT timer).

Optionally, the RRC inactive state of the user equipment has two sub-states: a first RRC inactive state (RRC Inactivate Resume) and a second RRC inactive state (RRC Inactivate suspend). After the user equipment activates the target bearer, the user equipment is in the first RRC inactive state. When the small data transmission timer expires, the user equipment enters the second RRC inactive state.

The small data transmission timer is configured by the anchor gNB for the UE in an RRC release (RRC Release) message.

In another embodiment, if the user equipment is in the RRC inactive state, when the small data transmission timer runs out of time, the user equipment enters an RRC idle state. Certainly, a behavior action of the UE may also be configured based on an actual requirement after the small data transmission timer expires.

S406: The anchor gNB delivers the downlink data packet.

Specifically, the anchor gNB forwards the downlink data packet to the serving gNB, and the serving gNB delivers the downlink data packet to the UE. The UE receives the data packet by using the target bearer activated in the foregoing step.

S407: The anchor gNB delivers a subsequently received downlink data packet.

When the anchor gNB subsequently receives a data packet sent by the core network to the UE again, the anchor gNB delivers the data packet to the UE by using the activated target bearer. The UE receives, based on the target bearer, the data packet delivered by the anchor gNB.

S408: The anchor gNB releases the session.

Specifically, when downlink data transmission is completed, the anchor gNB delivers an RRC release (RRC-Release) message to the user equipment, so that the user equipment enters the RRC inactive state or idle state.

In this way, when receiving the downlink data packet sent to the user equipment by the core network, the anchor gNB in this embodiment first determines whether the downlink data packet meets the preset transmission scenario. If the downlink data packet supports the preset transmission scenario, the anchor gNB sends the enhanced paging message to the user equipment, so that the user equipment receives the downlink data packet in the RRC inactive state. Because the user equipment can receive the downlink data packet in the RRC inactive state without migrating to the connected state, signaling overheads for establishing an RRC connection to the anchor gNB are reduced, and power consumption of the user equipment is reduced.

### Embodiment 2

A difference between Embodiment 2 and Embodiment 1 lies in the following: After step S406 in Embodiment 1, the anchor gNB sends an RRC resume (RRC Resume) message to the user equipment, so that a state of the user equipment is migrated from the RRC inactive state to the RRC connected state.

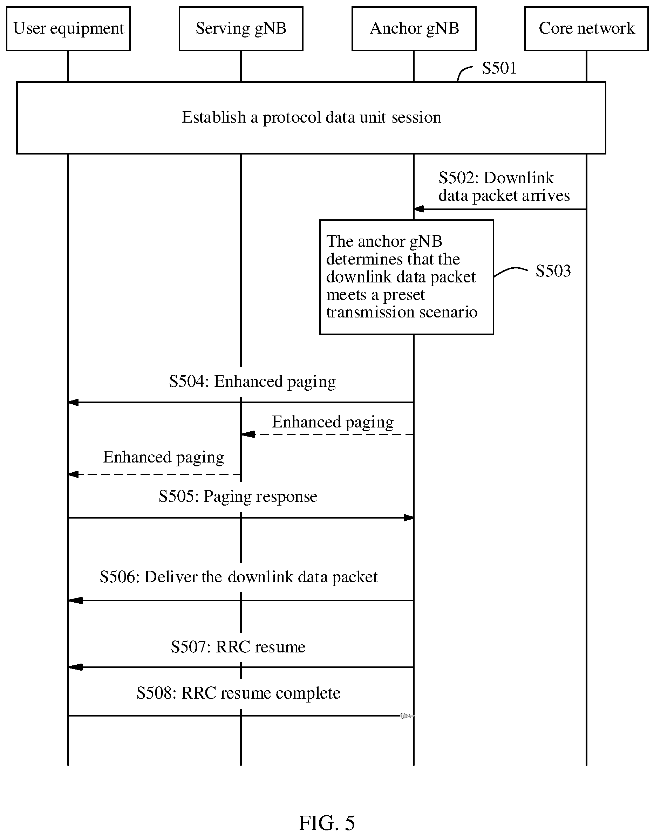

Referring to FIG. 5, the data transmission method may include the following steps:
S501: Establish a protocol data unit session (Protocol Data Unit session, PDU session).
S502: A downlink data packet sent, to user equipment, by a core network side to an anchor gNB arrives.
S503: The anchor gNB determines that the downlink data packet meets a preset transmission scenario.
S504: The anchor gNB sends an enhanced paging message to the user equipment.
S505: After receiving the paging message, the user equipment sends a paging response message to the anchor gNB.
S506: After receiving the paging response message, the anchor gNB sends the downlink data packet to the user equipment.
S507: The anchor gNB sends an RRC resume (RRC Resume) message to the user equipment, to indication the user equipment to enter an RRC connected state.

When at least one of the following conditions is met, a serving gNB determines that the user equipment needs to be resumed to the RRC connected state.

Condition 1: Security context information is to be updated. When encryption and integrity protection need to be performed on a downlink data packet/signaling due to a security-based reason, the serving gNB updates the security context information.

Condition 2: A downlink data packet is to be obtained from a non-mobile terminated-small data transmission (Non-MT-SDT) bearer. The non-mobile terminated-small data transmission (Non-MT-SDT) bearer is a bearer that does not support a mobile terminated-small data transmission (MT-SDT) function.

Condition 3: A size of a data packet is greater than a first preset threshold. The size of the data packet may be a size of a single data packet, or may be a size of a total data amount. The size of the total data amount is a size of a total amount of data allowed to be transmitted during mobile terminated-small data transmission (MT-SDT). The size of the total data amount may be a size of an amount of downlink data packets and/or uplink data packets. The first preset threshold may also be referred to as a size threshold.

Condition 4: A quantity of data packets is greater than a second preset threshold. The quantity of data packets is a quantity of downlink data packets sent and/or uplink data packets received during small data transmission (SDT).

It may be understood that, a value of the first preset threshold/the second preset threshold is related to factors such as a transmission bandwidth, a transmission rate, and transmission quality, and a gNB may set the first preset threshold/the second preset threshold based on a data transmission situation.

S508: After the user equipment enters the RRC connected state, the user equipment sends an RRC resume complete (RRC Resume Complete) message to the anchor gNB.

It may be understood that in this embodiment, when the anchor gNB sends the downlink data packet to the user equipment, after determining that the downlink data packet to be sent to the user equipment does not meet a preset scenario or another scenario (for example, security context update), the anchor gNB determines that the user equipment needs to be resumed to the RRC connected state. The serving gNB triggers the RRC Resume (RRC Resume) message to indicate the user equipment to enter the RRC connected state. After entering the RRC connected state, the user equipment triggers the RRC resume complete (RRC Resume Complete) message. Before resuming to the RRC connected state, the user equipment may receive the downlink data packet when being in the RRC inactive state.

### Embodiment 3

A difference between Embodiment 3 and Embodiment 1 lies in the following: After step S403 in Embodiment 1, the anchor gNB sends an enhanced paging message to the user equipment, the user equipment triggers random access and activates a corresponding target bearer after receiving the enhanced paging message, and the user equipment receives the downlink data packet in an RRC inactive state.

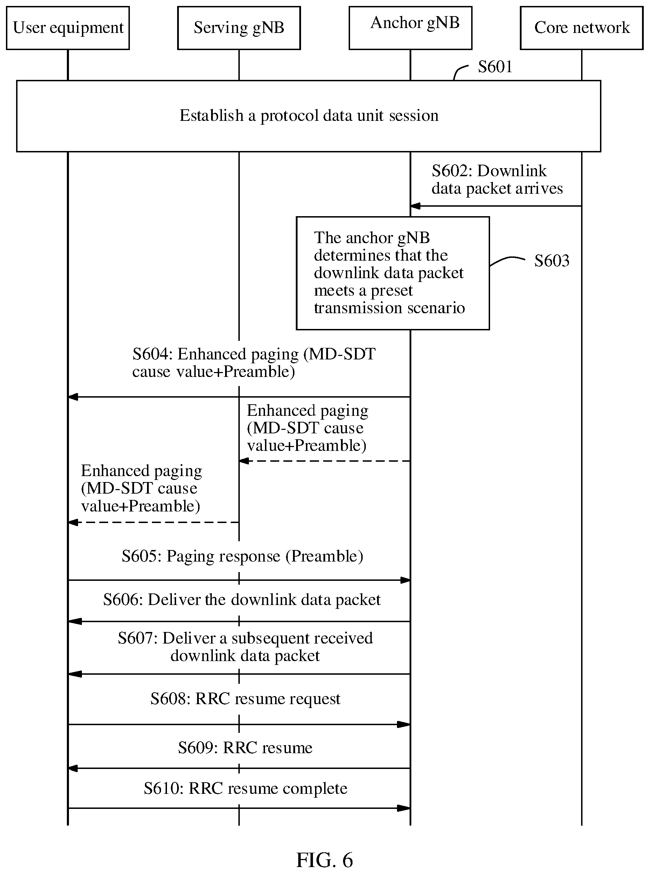

Referring to FIG. 6, the data transmission method may include the following steps:
S601: Establish a protocol data unit session (Protocol Data Unit session, PDU session).
S602: A downlink data packet sent, to user equipment, by a core network side to an anchor gNB arrives.
S603: The anchor gNB determines that the downlink data packet meets a preset transmission scenario.
S604: The anchor gNB sends an enhanced paging message to the user equipment.

The enhanced paging message triggered by the anchor gNB is an enhanced RAN-paging message, and the enhanced paging message carries an MD-SDT cause value. The user equipment determines, based on the MD-SDT cause value, whether the UE can receive the downlink data packet in an RRC inactive state.

Optionally, the enhanced paging message carries receive indication information, and the user equipment determines, based on the receive indication information, whether the UE can receive the downlink data packet in the RRC inactive state.

For example, when the UE receives the enhanced paging message, based on the MD-SDT cause value, the UE in the RRC inactive state can receive the downlink data packet.

Further, the enhanced paging message may carry trigger indication information, which is used to indicate whether the user equipment can send an RRC resume request (RRC Resume Request) to the anchor gNB after receiving the enhanced paging message.

For example, if the trigger indication information carried in the enhanced paging message indicates the UE to send the RRC Resume Request message to the anchor gNB after receiving the enhanced paging message, when the UE receives the enhanced paging message, based on the trigger indication information, the UE in the RRC inactive state sends the RRC Resume Request message to establish an RRC connection relationship with the anchor gNB, so that the UE enters a connected state, and receives the downlink data packet in the connected state.

For example, an example of an enhanced paging message format (Enhanced Paging format) is as follows:

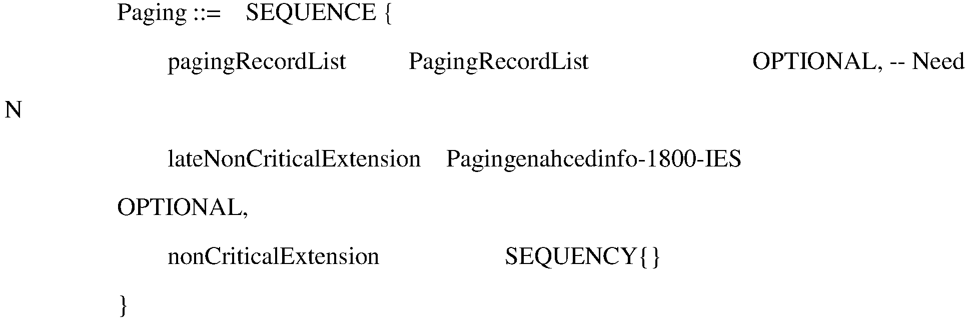

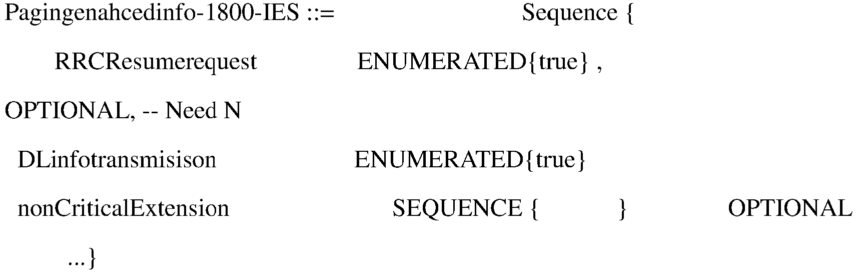

Compared with an existing paging message, a PagingEnhancedInfo element is added to the enhanced paging message. The PagingEnhancedInfo includes an RRCResumeRequest element and a DLinfotransmisison element, the RRCResumeRequest element is the trigger indication information described above, and the DLinfotransmisison element is the receive indication information described above.

Specifically, if a Boolean variable of the RRCResumeRequest element is "Ture", the UE determines, based on the trigger indication information, not to send the RRCResumeRequest message to the anchor gNB after receiving the enhanced paging message; or if the Boolean variable of the RRCResumeRequest element is "false", the UE determines, based on the trigger indication information, to send the RRCResumeRequest message to the anchor gNB after receiving the paging message.

If a Boolean variable of the DLinfotransmisison element is "Ture", the UE monitors a C-RNTI and/or an I-RNTI after triggering an uplink random access procedure based on the receive indication information, to receive the downlink data packet sent by the anchor gNB.

In an embodiment, the enhanced paging message further carries a dedicated Preamble sequence.

S605: After receiving the paging message, the user equipment in an RRC inactive state sends a paging response message to the anchor gNB.

Specifically, after successfully receiving the paging message, the UE triggers a random access procedure to activate a corresponding target bearer. The UE sends the dedicated Preamble sequence to the anchor gNB, and monitors a downlink data packet scheduled by a C-RNTI or an I-RNTI.

Certainly, the user equipment may further start a small data transmission timer after sending the paging response message. Functions of the small data transmission timer have been described in Embodiment 1, and details are not described herein again.

The paging response message may be an RRC resume request (RRC Resume Request) message. Certainly, in another embodiment, the paging response message may alternatively be another message.

Further, if an uplink resource configured for the UE is valid, the UE directly responds with the RRC Resume Request message. As the paging response message, the RRC Resume Request message carries an MT access cause value.

In an embodiment, the UE triggers an uplink random access procedure, and responds with the RRC Resume Request message in an Msg3 message in random access. As the paging response message, the RRC Resume Request message carries an MT access cause value.

S606: After receiving the paging response message, the anchor gNB sends the downlink data packet to the user equipment.

Specifically, the anchor gNB sends the downlink data packet to the UE, and the UE receives the downlink data packet by using the target bearer activated in the foregoing step.

Further, the anchor gNB receives the dedicated preamble code sent by the user equipment, and determines that the UE successfully receives the paging message.

Further, if the UE has no dedicated preamble code, the UE triggers a random access procedure, and feeds back, by using the Msg3 message, that the paging message has been successfully received.

If the Boolean variable of RRCResumerequest carried in the paging message is "True", the UE determines, based on the trigger indication information, not to trigger sending of the RRCResumeRequest message. The UE adds, the Msg3 message, only a MAC CE that includes information such as a UE identifier, and integrity of the message needs to be protected.

Further, if the UE does not have the dedicated preamble code, the UE triggers a random access procedure. If the paging message indicates that an MT-SDT service arrives, the UE may not send the RRC message in the Msg3 message, and send a MAC CE message that carries the UE identifier.

S607: The anchor gNB delivers a subsequently received downlink data packet to the user equipment.

S608: When determining that an uplink data packet sent to the anchor gNB does not meet a preset uplink transmission scenario, the user equipment sends the RRC resume request message to the anchor gNB.

When at least one of the following conditions is met, the user equipment determines that the uplink data packet does not meet the preset uplink transmission scenario, and a state of the user equipment is migrated from the RRC inactive state to an RRC connected state.

Condition 1: A size of the uplink data packet is greater than a third preset threshold. The size of the uplink data packet may be a size of a single uplink data packet, or may be a size of a total data amount. The size of the total data amount is a size of a total amount of data allowed to be transmitted during mobile terminated-small data transmission (MT-SDT).

Condition 2: A quantity of uplink data packets is greater than a fourth preset threshold. The quantity of uplink data packets is a quantity of uplink data packets sent during small data transmission (SDT).

It may be understood that, a value of the third preset threshold/the fourth preset threshold is related to factors such as a transmission bandwidth, a transmission rate, and transmission quality, and a gNB may set the third preset threshold/the fourth preset threshold based on a data transmission situation.

The UE receives, based on the target bearer, the data packet delivered by the anchor gNB.

S609: The anchor gNB sends an RRC resume message to the user equipment.

Specifically, the anchor gNB sends the RRC resume message to the user equipment by using a serving gNB, to resume the RRC connected state.

S610: The user equipment sends an RRC resume complete message to the anchor gNB.

Specifically, the user equipment sends the RRC resume complete message to the anchor gNB by using the serving gNB, so that the state of the user equipment is migrated to the RRC connected state.

### Embodiment 4

A difference between Embodiment 4 and Embodiment 1 lies in the following: After step S406 in Embodiment 1, the serving gNB triggers an RRC resume (RRC Resume) message to indicate the user equipment to enter an RRC connected state.

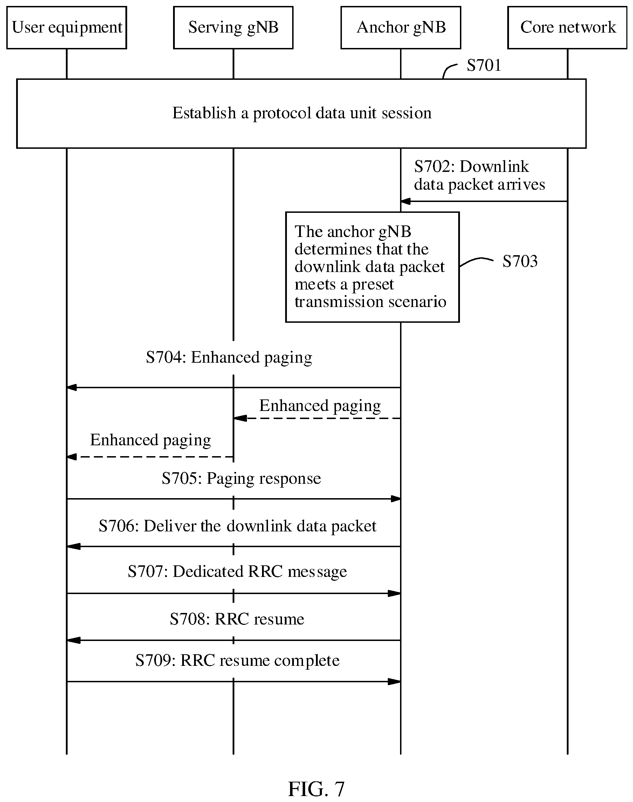

Referring to FIG. 7, the data transmission method may include the following steps:
S701: Establish a protocol data unit session (Protocol Data Unit session, PDU session).
S702: A downlink data packet sent, to user equipment, by a core network side to an anchor gNB arrives.
S703: The anchor gNB determines that the downlink data packet meets a preset transmission scenario.
S704: The anchor gNB sends an enhanced paging message to the user equipment.
S705: After receiving the enhanced paging message, the user equipment in an RRC inactive state sends a paging response message to the anchor gNB.
S706: The anchor gNB delivers the downlink data packet to the user equipment.
S707: The user equipment sends a dedicated RRC message to the anchor gNB.

When the user equipment determines that an uplink data packet sent to the network side does not meet a preset uplink transmission scenario (as described in Embodiment 3), the user equipment sends the dedicated RRC message to the anchor gNB to notify the anchor gNB.

In an embodiment, when the UE receives a new uplink data packet and determines that the data packet does not meet the preset uplink transmission scenario, the UE triggers the dedicated RRC message on a DCCH channel to notify the anchor gNB of the following: The UE receives an uplink data packet that does not meet the preset uplink transmission scenario.

Further, the dedicated RRC message carries an uplink data packet buffered in the user equipment and a bearer used when the UE receives the uplink data packet.

Optionally, the dedicated RRC message sent by the UE to the anchor gNB undergoes integrity protection and encryption protection.

In an embodiment, when the UE receives a new data packet and determines that the uplink data packet does not meet the preset uplink transmission scenario, the UE sends an RRCResumeRequest message to the anchor gNB on a CCCH channel, to notify the anchor gNB that an uplink data packet does not meet the preset uplink transmission scenario arrives.

In an embodiment, when the user equipment receives an uplink data packet that does not meet the preset uplink transmission scenario, the user equipment sends an RRCResumeRequest message to the anchor gNB to migrate a state, to request the anchor gNB to migrate the user equipment from the RRC inactive state to an RRC connected state.

S708: The anchor gNB sends an RRC resume (RRC Resume) message to the user equipment, to indication the user equipment to enter an RRC connected state.

S709. After entering the RRC connected state, the user equipment sends an RRC resume complete (RRC Resume Complete) message to the anchor gNB.

It may be understood that in this embodiment, when the user equipment receives an uplink data packet that does not meet the preset uplink transmission scenario, the user equipment sends the RRCResumeRequest to the anchor gNB, to request the anchor gNB to migrate the user equipment from the RRC inactive state to the RRC connected state anchor, and the anchor gNB triggers the RRC resume (RRC Resume) message to indicate the user equipment to enter the RRC connected state. After entering the RRC connected state, the user equipment triggers the RRC resume complete (RRC Resume Complete) message. Before resuming to the RRC connected state, the user equipment may continue to receive the downlink data packet when being in the RRC inactive state.

### Embodiment 5

A difference between Embodiment 5 and Embodiment 3 lies in the following: After S604 in Embodiment 3, the PDU session ends because the small data transmission timer on the user equipment side expires.

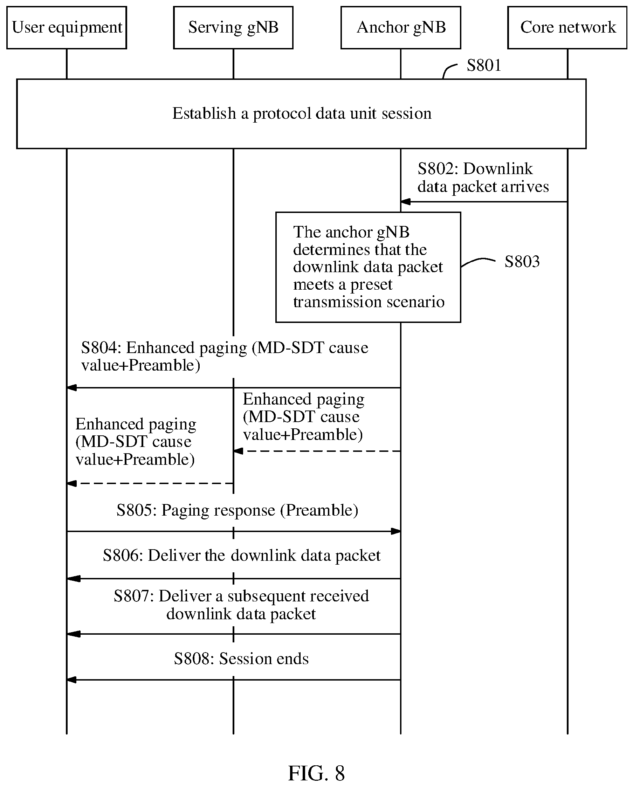

Referring to FIG. 8, the data transmission method may include the following steps:
S801: Establish a protocol data unit session (Protocol Data Unit session, PDU session).
S802: A downlink data packet sent, to user equipment, by a core network side to an anchor gNB arrives.
S803: The anchor gNB determines that the downlink data packet meets a preset transmission scenario.
S804: The anchor gNB sends an enhanced paging message to the user equipment.
S805: After receiving the paging message, the user equipment in an RRC inactive state sends a paging response message to the anchor gNB.
S806: After receiving the paging response message, the anchor gNB sends the downlink data packet to the user equipment.
S807: The anchor gNB delivers a subsequently received downlink data packet to the user equipment.
S808: The session between the user equipment and the anchor gNB ends.

In an embodiment, when a small data transmission timer on the UE side expires, the UE ends the PDU session and enters an RRC idle state from the RRC inactive state.

In an embodiment, the RRC inactive state of the user equipment has two sub-states: a first RRC inactive state (RRC Inactivate Resume) and a second RRC inactive state (RRC Inactivate suspend). After the user equipment activates a target bearer, the user equipment is in the first RRC inactive state. When the small data transmission timer expires, the PDU session ends and the user equipment enters the second RRC inactive state from the first RRC inactive state.

In an embodiment, the anchor gNB sends an RRC release (RRC Release) message to the user equipment to end the current session.

After the small data timer expires and the session ends, the user equipment starts the small data timer when any one of the following conditions is met:
Condition 1: After the UE successfully receives the paging message from the anchor gNB, the UE sends a response message to the anchor gNB, triggers uplink random access, and starts the small data timer.
Condition 2: The UE starts the small data timer after receiving a downlink data packet sent by the anchor gNB.
Condition 3: When the UE sends an uplink data packet, where the uplink data packet may include retransmitted data and signaling, the UE starts the small data timer.

The small data timer has fixed duration.

After the user equipment successfully receives the paging message from the anchor gNB, the user equipment sends the paging response message to the anchor gNB, where the paging response message carries a Preamble to notify the anchor gNB that the paging message is successfully received; and starts the small data timer. The small data timer identifies duration of a mobile-terminated small data transmission session.

To reduce power consumption of the user equipment, during a mobile-terminated small data transmission session, the UE discontinuously monitors a control channel.

A period for discontinuously monitoring the control channel is configured by the anchor gNB for the UE in the RRC Release message, or configured by the anchor gNB for the UE in the paging message, or configured by the anchor gNB for the UE by using a broadcast message.

### Embodiment 6

A difference between Embodiment 6 and Embodiment 1 lies in the following: After step S406 in Embodiment 1, the anchor gNB sends an RRC release message to the user equipment, to release an RRC connection.

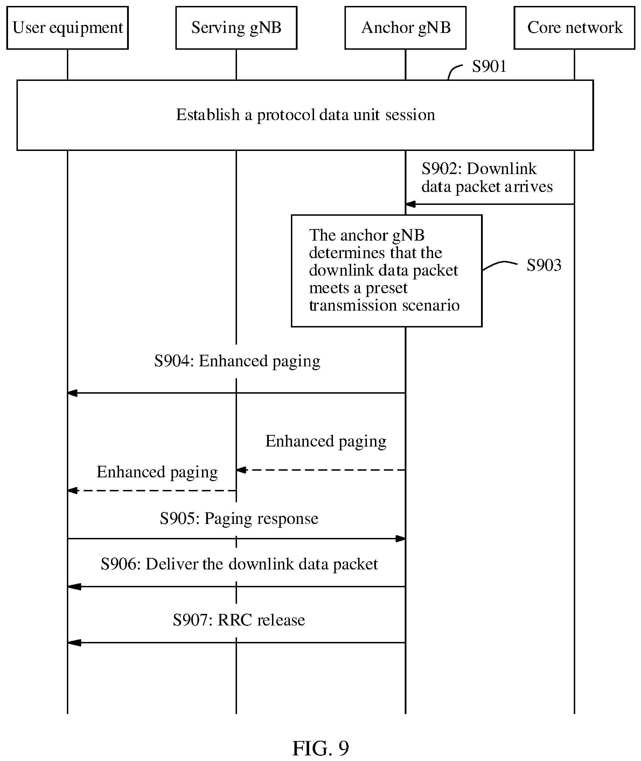

Referring to FIG. 9, the data transmission method may include the following steps:
S901: Establish a protocol data unit session (Protocol Data Unit session, PDU session).
S902: A downlink data packet sent, to user equipment, by a core network side to an anchor gNB arrives.
S903: The anchor gNB determines that the downlink data packet meets a preset transmission scenario.
S904: The anchor gNB sends an enhanced paging message to the user equipment.
S905: After receiving the paging message, the user equipment in an RRC inactive state sends a paging response message to the anchor gNB.
S906: After receiving the paging response message, the anchor gNB sends the downlink data packet to the user equipment.
S907: The anchor gNB sends an RRC release message to the UE.

Specifically, after receiving the paging response message (for example, RRC Request Resume) sent by the UE, the anchor gNB sends the downlink data packet to the UE, and sends the RRC release message to the UE, so that the UE enters an idle state from the RRC inactive state.

The anchor gNB may deliver the RRC release message and the downlink data packet to the UE as a same message. Certainly, the anchor gNB may alternatively send the RRC release message and the downlink data packet to the UE as two separate messages.

In an embodiment, a reason for the anchor gNB to deliver the downlink data packet and the RRC release message to the UE includes the following:
Reason 1: The anchor gNB determines, based on setting of the anchor gNB, to deliver the RRC release message.

For example, due to an implementation algorithm of the anchor gNB, when sending the downlink data packet, the gNB determines, based on load of the gNB, to deliver the RRC release message, to release a connection between the UE and the anchor gNB and reduce the load of the anchor gNB.

Reason 2: The anchor gNB receives an indication from the core network side.

In an embodiment, the anchor gNB receives a downlink data packet sent by the core network side to the UE, where the downlink data packet carries a single data packet indication, and the anchor gNB delivers, based on the single data packet indication, the RRC release message when delivering the downlink data packet to the UE.

In an embodiment, during running of a small data timer of the UE, the anchor gNB again does not receive a data packet sent by the core network side. After sending a last downlink data packet to the UE, the anchor gNB sends the RRC release message to the UE to release an RRC connection between the anchor gNB and the UE because the anchor gNB receives no new downlink data packet.

In an embodiment, a condition for starting or restarting an SDT Timer is that a downlink data packet is received or a downlink data packet is scheduled.

It should be noted that, in Scenario 2, the anchor gNB and the serving gNB are a same gNB, and the "serving gNB" and the "anchor gNB" in all method steps in the foregoing embodiment of Scenario 1 may be replaced with a "network device" or a "gNB", to implement the data transmission method in Scenario 2.

It may be understood that, embodiments of this application may be further used in another service scenario, for example, quality of service (Quality of Service, QoS) requirements of services such as extended reality (Extended Reality, XR) and ultra reliable low latency communication (Ultra Reliable Low Latency Communication, URLLC). The network device may notify the user equipment to receive a downlink data packet/signaling in an RRC inactive state, to quickly resume a downlink connection and transmit the downlink data packet/signaling to the user equipment in a timely manner.

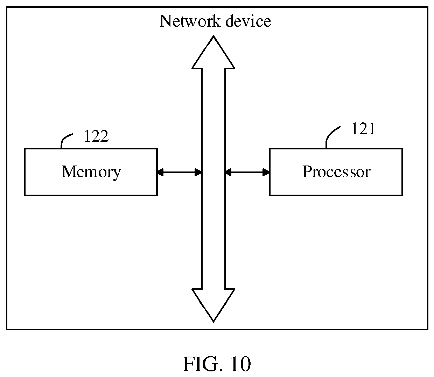

FIG. 10 is a schematic diagram of a structure of a network device according to an embodiment of this application. The network device may be configured to perform the data transmission methods in the embodiments corresponding to FIG. 3 to FIG. 9.

As shown in FIG. 10, the network device may include: components such as a processor 121 and a memory 122. These components are connected and communicate with each other by using one or more buses.

The processor 121 is a control center of the network device, connects various parts of an entire gNB by using various interfaces and lines, and performs various functions and/or data processing of the gNB by running or executing a software program and/or module stored in the memory 122 and invoking data stored in the memory 122. The processor 121 may include an integrated circuit (integrated circuit, IC for short), for example, may include a single packaged IC, or may include a plurality of packaged ICs connected to a same function or different functions. For example, the processor 121 may be a communication processor (communication processor, CP for short).

The memory 122 may be configured to store a software program and a module. The processor 121 runs the software program and the module that are stored in the memory 122, to implement various function applications and data processing of the network device. In a specific implementation of this application, the memory 122 may include a volatile memory, for example, a nonvolatile random access memory (nonvolatile random access memory, NVRAM for short), a phase change random access memory (phase change RAM, PRAM for short), or a mageto-resistive random access memory (mageto-resistive RAM, MRAM for short), and may further include a nonvolatile memory, for example, at least one magnetic disk storage device, an electrically erasable programmable read-only memory (Electrically erasable programmable read-only memory, EEPROM for short), or a flash memory device, for example, an NOR flash memory (NOR flash memory) or an NAND flash memory (NAND flash memory).

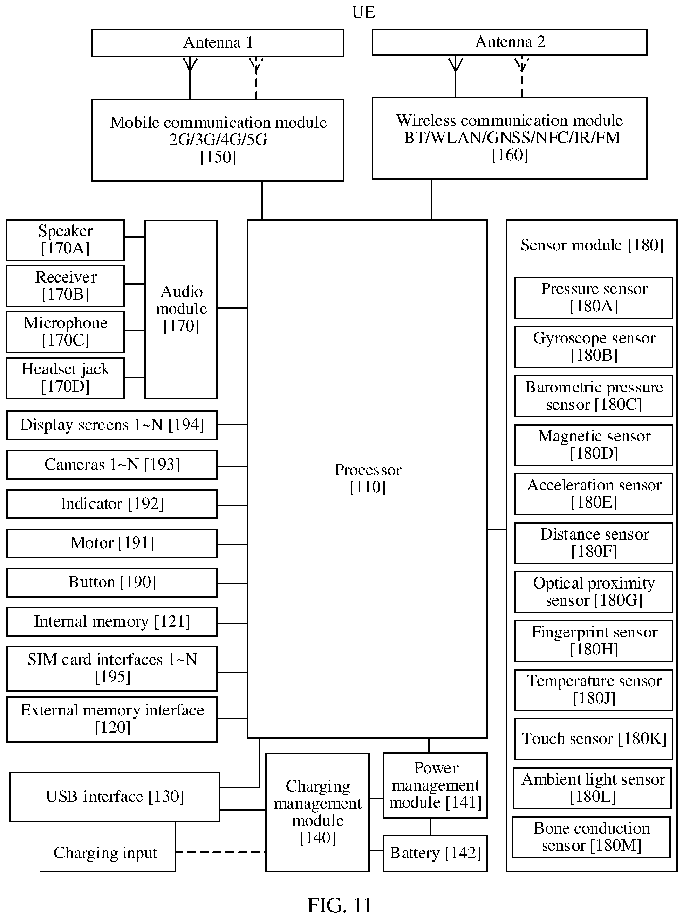

FIG. 11 is a schematic diagram of a structure of user equipment according to an implementation of this application.

As shown in FIG. 11, in some embodiments, the structure of the user equipment (UE) may be shown in FIG. 11, and the UE may include: a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment does not constitute a specific limitation on the UE. In some other embodiments, the UE may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a Modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The charging management module 140 is configured to receive a charging input from a charger. The charger may be a wireless charger or may be a wired charger.

The power management module 141 is configured to connect the battery 142 and the charging management module 140 to the processor 110. The power management module 141 receives an input from the battery 142 and/or an input from the charging management module 140, and supplies power to the processor 110, the internal memory 171, the display screen 194, the camera 193, the wireless communication module 160, and the like.

A wireless communication function of the UE may be implemented by using the antenna 1, the antenna 2, the mobile communication module 150, the wireless communication module 160, the modem, the baseband processor, and the like.

The antenna 1 and the antenna 2 are configured to transmit and receive an electromagnetic wave signal. Each antenna in the UE may be configured to cover one or more communication frequency bands. Different antennas may be further multiplexed to improve antenna utilization.

The mobile communication module 150 may provide a solution for wireless communication including 2G/3G/4G/5G and the like applied to the UE.

The wireless communication module 160 may provide a solution for wireless communication that is applied to the UE and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In this embodiment of this application, the wireless communication module 160 may be used by the UE to send, to a network node, a request for resuming an RRC connection, and receives a response message from the network node.

The UE implements a display function by using the GPU, the display screen 194, the application processor, and the like. The GPU is a microprocessor for image processing, and is connected to the display screen 194 and the application processor.

The display screen 194 is configured to display an image, a video, or the like. A series of graphical user interfaces (graphical user interface, GUI) may be displayed on the display screen 194 of the UE.

The UE may implement a photographing function by using the ISP, the camera 193, the video codec, the GPU, the display screen 194, the application processor, and the like.

The camera 193 is configured to capture a still image or a video.

The external memory interface 120 may be configured to connect to an external storage card, for example, a Micro SD card, to extend a storage capability of the UE.

The internal memory 121 may be configured to store computer-executable program code. The executable program code includes instructions. The processor 110 runs the instructions stored in the internal memory 121, to implement various function applications and data processing of the UE.

The UE may implement an audio function, for example, music playing and video recording, by using the audio module 170, the speaker 170A, the receiver 170B, the microphone 170C, the headset interface 170D, the application processor, and the like. The UE may further include a pressure sensor 180A, a barometric pressure sensor 180C, a gyroscope sensor 180B, a magnetic sensor 180D, an acceleration sensor 180E, a distance sensor 180F, an optical proximity sensor 180G, an ambient light sensor 180L, a fingerprint sensor 180H, a temperature sensor 180J, a touch sensor 180K, a bone conduction sensor 180M, a button 190, a motor 191, an indicator 192, and the like.

The SIM card interface 195 is configured to connect to a SIM card. The SIM card may be inserted into the SIM card interface 195 or removed from the SIM card interface 195 to implement contact with and separation from the UE. The UE may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The SIM card interface 195 may also be compatible with an external storage card. The UE interacts with a network by using the SIM card, to implement functions such as a call making/answering and data communication.

In addition, on the foregoing components, an operating system is running, such as a Harmony operating system, an iOS operating system, an Android operating system, or a Windows operating system. An application may be installed and runs on the operating system. In some other embodiments, there may be a plurality of operating systems running in the UE.

It should be understood that, the hardware modules included in the UE shown in FIG. 11 are merely examples for description, and constitute no limitation on a specific structure of the UE. Actually, the UE provided in this embodiment of this application may further include another hardware module that has an interaction relationship with the hardware module shown in the figure. This is not specifically limited herein. For example, the UE may further include a flash, a micro projection apparatus, and the like. For another example, if the UE is a PC, the UE may further include components such as a keyboard and a mouse.

It may be understood that the user equipment shown in FIG. 11 may implement all method steps of the method embodiments on the user equipment side in this application.

In specific implementation, this application further provides a computer storage medium. The computer storage medium may store a program, and when the program is executed, some or all of the steps in the embodiments of the data transmission method provided in this application may be included. The storage medium may be a magnetic disk, an optical disc, a read-only memory (read-only memory, ROM), a random access memory (random access memory, RAM), or the like.

It should be further understood that, the memory in the embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synch link dynamic random access memory (synch link DRAM, SLDRAM), and a direct ram bus random access memory (direct ram bus RAM, DRRAM). It should be noted that the memories in the systems and methods described in this specification are intended to include but not limited to these memories and any memory of another proper type.

In this application, that A corresponds to B may be understood as that A is associated with B or A and B have an association relationship.

It should be understood that, division of manners, situations, categories, and embodiments in the embodiment of this application are merely intended to facilitate description, and should not constitute a specific limitation. Features in various manners, categories, situations, and embodiments may be combined when no contradiction exists.

It should be further understood that, "first" and "second" in the embodiments of this application are merely intended to for distinguishing, and should not constitute any limitation on this application.

It should be understood that, the term "and/or" used in this specification describes only an association relationship for describing associated objects and represents that three relationships may exist. For example, "A and/or B" may represent the following three cases: Only A exists, both A and B exist, and only B exists. In addition, the character "/" in this specification generally indicates an "or" relationship between the associated objects.

A person of ordinary skill in the art may be aware that, the units and the algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A skilled person may use different methods to implement the described functions for each particular application, but this implementation should not be considered as beyond the scope of this application.

It may be clearly understood by a person skilled in the art that, for convenient and brief description, for specific working processes of the system, apparatus, and unit described above, refer to corresponding processes in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of the embodiments.

In addition, functional units in the embodiments of this application may be integrated into one processing unit, each of the units may exist alone physically, or two or more units may be integrated into one unit.

When the function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps in the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

It may be understood that various numerical numbers in the embodiments of this application are merely used for differentiation for ease of description, and are not used to limit the scope of the embodiments of this application.

An embodiment, not covered by the claimed invention, of this application further provides a storage medium, configured to store a computer program or instructions. When the computer program or the instruction are executed by a processor, the data transmission method in the embodiments of this application is implemented. Same method steps and beneficial effects are not described herein again.

## Claims

1. A data transmission method, applied to a network device, wherein the method comprises:
a) receiving (S301) a first downlink data packet;
b) if the first downlink data packet meets a preset transmission scenario, sending (S302) an enhanced paging message to a user equipment, wherein
c) the enhanced paging message carries a mobile-terminated small data transmission indication, wherein the mobile-terminated small data transmission indication is used to indicate the user equipment, when the user equipment is in a radio resource control, RRC, inactive state, to activate a corresponding target bearer; and
d) receiving (S304) a paging response message sent by the user equipment, and sending (S305) the first downlink data packet to the user equipment on the activated target bearer when the user equipment is in the RRC inactive state; and
e) wherein the preset transmission scenario comprises any one of the following conditions: the downlink data packet is a small data packet, the downlink data packet is in a preset mobile-terminated small data transmission list in the network device, or the downlink data packet carries corresponding indication information and the indication information is used to indicate whether mobile-terminated small data transmission is triggered for the downlink data packet.

2. The data transmission method according to claim 1, wherein the enhanced paging message further carries a trigger indication and a receive indication, the trigger indication is used to indicate the user equipment not to send an RRC resume request message to the network device when receiving the enhanced paging message, and the receive indication is used to indicate the user equipment to receive, in the RRC inactive state, the first downlink data packet sent by the network device.

3. The data transmission method according to claim 1 or 2, wherein the network device sends the first downlink data packet to the user equipment by using a downlink media access control layer protocol data unit, wherein the downlink media access control layer protocol data unit carries a media access control layer control unit, and the media access control layer control unit is configured to indicate the user equipment, after receiving the enhanced paging message and when the user equipment is in the RRC inactive state, not to send the RRC resume request message to the network device, and to directly receive, in the RRC inactive state, the first downlink data packet sent by the network device.

4. The data transmission method according to any one of claims 1 to 3, wherein the enhanced paging message further carries a bearer identity, so that the user equipment activates the corresponding target bearer based on the bearer identity and the mobile-terminated small data transmission indication.

5. The data transmission method according to any one of claims 1 to 4, wherein the method further comprises:
receiving a second downlink data packet to be sent to the user equipment, and if the second downlink data packet does not meet the preset transmission scenario, or/and
receiving an uplink data packet sent by the user equipment, and if the uplink data packet does not meet the preset transmission scenario, sending an RRC resume message to the user equipment, so that the user equipment migrates from the RRC inactive state to an RRC connected state, wherein
time for receiving the first downlink data packet by the network device is earlier than time for receiving the second downlink data packet and the uplink data packet by the network device.

6. The data transmission method according to claim 5, wherein a method for determining that the second downlink data packet does not meet the preset transmission scenario, and/or that the uplink data packet does not meet the preset transmission scenario comprises/comprise:
the second downlink data packet is a non-small data packet, or/and
the uplink data packet is a non-small data packet, or/and
a quantity of the second downlink data packets is greater than a quantity threshold, or/and
a quantity of the uplink data packets is greater than a quantity threshold, or/and
a size of the second downlink data packet is greater than a size threshold, or/and
a size of the uplink data packet is greater than a size threshold.

7. The data transmission method according to any one of claims 1 to 6, wherein when sending the first downlink data packet to the user equipment, the method further comprises:
determining that the first downlink data packet is a single data packet; or
starting, by the network device, a small data timer when sending the first downlink data packet to the user equipment, and if the small data timer expires and no new downlink data packet to be sent to the user equipment is received,
sending an RRC release message to the user equipment.

8. A data transmission method, applied to a user equipment, wherein the method comprises:
a) receiving (S302) an enhanced paging message sent by a network device, wherein the enhanced paging message carries a mobile-terminated small data transmission indication, wherein the mobile-terminated small data transmission indication is used to indicate the user equipment, when the user equipment is in a radio resource control, RRC, inactive state, to activate a corresponding target bearer;
b) activating (S303) a corresponding target bearer based on the mobile-terminated small data transmission indication, and the user equipment is in an RRC inactive state;
c) sending (S304) a paging response message to the network device; and
d) receiving (S305), based on the target bearer, a first downlink data packet sent by the network device when the user equipment is in the RRC inactive state.

9. The data transmission method according to claim 8, wherein the enhanced paging message further carries a trigger indication and a receive indication, the trigger indication is used to indicate the user equipment not to send an RRC resume request message to the network device when receiving the enhanced paging message, and the receive indication is used to indicate the user equipment to receive, in the RRC inactive state, the first downlink data packet sent by the network device.

10. The data transmission method according to claim 8 or 9, wherein the network device sends the first downlink data packet to the user equipment by using a downlink media access control layer protocol data unit, wherein the downlink media access control layer protocol data unit further carries a media access control layer control unit, and the media access control layer control unit is configured to indicate the user equipment, after receiving the enhanced paging message and when the user equipment is in the RRC inactive state, not to send the RRC resume request message to the network device, and to directly receive, in the RRC inactive state, the first downlink data packet sent by the network device.

11. The data transmission method according to any one of claims 8 to 10, wherein the RRC inactive state comprises a first RRC inactive state and a second RRC inactive state, and when sending the paging response message to the network device, the user equipment is in the first RRC inactive state, and the method further comprises:
starting a small data packet timer; and
if the small data packet timer expires, deactivating the target bearer and migrating the user equipment from the first RRC inactive state to the second RRC inactive state.

12. The data transmission method according to any one of claims 8 to 11, wherein the method further comprises:
receiving a second downlink data packet; and
if the second downlink data packet does not meet a preset receiving scenario, or/and
sending an uplink data packet to the network device, and if the uplink data packet does not meet the preset receiving scenario, sending the RRC resume request message to the network device, so that the user equipment migrates from the RRC inactive state to an RRC connected state, wherein
time for receiving the first downlink data packet by the user equipment is earlier than time for receiving the second downlink data packet and sending the uplink data packet by the user equipment.

13. The data transmission method according to claim 12, wherein that the second downlink data packet does not meet the preset receiving scenario, or/and the uplink data packet do not meet the preset receiving scenario comprises:
the second downlink data packet is a non-small data packet, or/and
the uplink data packet is a non-small data packet, or/and
a quantity of the second downlink data packets is greater than a quantity threshold, or/and
a quantity of the uplink data packets is greater than a quantity threshold, or/and
a size of the second downlink data packet is greater than a size threshold, or/and
a size of the uplink data packet is greater than a size threshold.

14. The data transmission method according to any one of claims 8 to 13, wherein the enhanced paging message further carries a bearer identity, so that the user equipment activates the corresponding target bearer based on the bearer identity and the mobile-terminated small data transmission indication.

## Patentansprüche

1. Ein Datenübertragungsverfahren, angewendet auf eine Netzwerkvorrichtung, wobei das Verfahren umfasst:
a) Empfangen (S301) eines ersten Downlink-Datenpakets;
b) wenn das erste Downlink-Datenpaket ein voreingestelltes Übertragungsszenario erfüllt, Senden (S302) einer erweiterten Paging-Nachricht an eine Benutzereinrichtung, wobei
c) die erweiterte Paging-Nachricht eine Anzeige für die Übertragung kleiner Datenpakete zu einem mobilen Endgerät (mobile-terminated small data transmission indication) trägt, wobei die Anzeige für die Übertragung kleiner Datenpakete zu einem mobilen Endgerät dazu verwendet wird, die Benutzereinrichtung anzuweisen, wenn sich die Benutzereinrichtung in einem RRC-inaktiven Zustand (Radio Resource Control, RRC) befindet, einen entsprechenden Ziel-Bearer zu aktivieren; und
d) Empfangen (S304) einer von der Benutzereinrichtung gesendeten Paging-Antwortnachricht und Senden (S305) des ersten Downlink-Datenpakets an die Benutzereinrichtung auf dem aktivierten Ziel-Bearer, wenn sich die Benutzereinrichtung im RRC-inaktiven Zustand befindet; und
e) wobei das voreingestellte Übertragungsszenario eine der folgenden Bedingungen umfasst: das Downlink-Datenpaket ist ein kleines Datenpaket, das Downlink-Datenpaket befindet sich in einer voreingestellten Liste für die Übertragung kleiner Datenpakete zu mobilen Endgeräten in der Netzwerkvorrichtung, oder das Downlink-Datenpaket trägt entsprechende Indikationsinformationen und die Indikationsinformationen werden dazu verwendet, anzuzeigen, ob eine Übertragung kleiner Datenpakete zu einem mobilen Endgerät für das Downlink-Datenpaket ausgelöst wird.

2. Das Datenübertragungsverfahren nach Anspruch 1, wobei die erweiterte Paging-Nachricht ferner eine Auslöseanzeige und eine Empfangsanzeige trägt, wobei die Auslöseanzeige dazu verwendet wird, die Benutzereinrichtung anzuweisen, beim Empfang der erweiterten Paging-Nachricht keine RRC-Wiederaufnahme-Anforderungsnachricht an die Netzwerkvorrichtung zu senden, und die Empfangsanzeige dazu verwendet wird, die Benutzereinrichtung anzuweisen, im RRC-inaktiven Zustand das von der Netzwerkvorrichtung gesendete erste Downlink-Datenpaket zu empfangen.

3. Das Datenübertragungsverfahren nach Anspruch 1 oder 2, wobei die Netzwerkvorrichtung das erste Downlink-Datenpaket unter Verwendung einer Downlink-Medienzugriffssteuerungsschicht-Protokolldateneinheit (MAC-PDU) an die Benutzereinrichtung sendet, wobei die Downlink-Medienzugriffssteuerungsschicht-Protokolldateneinheit eine Medienzugriffssteuerungsschicht-Steuereinheit (MAC-CE) trägt, und die Medienzugriffssteuerungsschicht-Steuereinheit dazu konfiguriert ist, die Benutzereinrichtung anzuweisen, nach dem Empfang der erweiterten Paging-Nachricht und wenn sich die Benutzereinrichtung im RRC-inaktiven Zustand befindet, keine RRC-Wiederaufnahme-Anforderungsnachricht an die Netzwerkvorrichtung zu senden und im RRC-inaktiven Zustand das von der Netzwerkvorrichtung gesendete erste Downlink-Datenpaket direkt zu empfangen.

4. Datenübertragungsverfahren nach einem der Ansprüche 1 bis 3, wobei die verbesserte Paging-Nachricht ferner eine Trägeridentität überträgt, sodass das Benutzergerät den entsprechenden Zielträger basierend auf der Trägeridentität und der Anzeige zur Übertragung kleiner Daten bei mobilem Endgerät aktiviert.

5. Datenübertragungsverfahren nach einem der Ansprüche 1 bis 4, wobei das Verfahren ferner umfasst:
Empfangen eines zweiten Downlink-Datenpakets, das an das Benutzergerät gesendet werden soll, und wenn das zweite Downlink-Datenpaket nicht dem voreingestellten Übertragungsszenario entspricht, oder/und
Empfangen eines vom Benutzergerät gesendeten Uplink-Datenpakets, und wenn das Uplink-Datenpaket nicht dem voreingestellten Übertragungsszenario entspricht, Senden einer RRC-Wiederaufnahmenachricht an das Benutzergerät, sodass das Benutzergerät vom RRC-inaktiven Zustand in einen RRC-verbundenen Zustand übergeht, wobei
der Zeitpunkt für den Empfang des ersten Downlink-Datenpakets durch die Netzwerkvorrichtung früher liegt als der Zeitpunkt für den Empfang des zweiten Downlink-Datenpakets und des Uplink-Datenpakets durch die Netzwerkvorrichtung.

6. Datenübertragungsverfahren nach Anspruch 5, wobei ein Verfahren zur Bestimmung, dass das zweite Downlink-Datenpaket nicht dem voreingestellten Übertragungsszenario entspricht und/oder dass das Uplink-Datenpaket nicht dem voreingestellten Übertragungsszenario entspricht, umfasst:
das zweite Downlink-Datenpaket ein Nicht-Klein-Datenpaket ist, oder/und
das Uplink-Datenpaket ein Nicht-Klein-Datenpaket ist, oder/und
eine Menge der zweiten Downlink-Datenpakete größer als ein Mengenschwellenwert ist, oder/und
eine Menge der Uplink-Datenpakete größer als ein Mengenschwellenwert ist, oder/und
eine Größe des zweiten Downlink-Datenpakets größer als ein Größenschwellenwert ist, oder/und
eine Größe des Uplink-Datenpakets größer als ein Größenschwellenwert ist.

7. Datenübertragungsverfahren nach einem der Ansprüche 1 bis 6, wobei das Verfahren beim Senden des ersten Downlink-Datenpakets an das Benutzergerät ferner umfasst:
Bestimmen, dass das erste Downlink-Datenpaket ein einzelnes Datenpaket ist; oder
Starten eines Klein-Daten-Timers durch die Netzwerkvorrichtung beim Senden des ersten Downlink-Datenpakets an das Benutzergerät, und wenn der Klein-Daten-Timer abläuft und kein neues Downlink-Datenpaket empfangen wird, das an das Benutzergerät gesendet werden soll,
Senden einer RRC-Freigabenachricht an das Benutzergerät.

8. Datenübertragungsverfahren, angewendet auf ein Benutzergerät, wobei das Verfahren umfasst:
a) Empfangen (S302) einer erweiterten Paging-Nachricht, die von einer Netzwerkvorrichtung gesendet wird, wobei die erweiterte Paging-Nachricht eine Angabe zur Small-Data-Übertragung für mobile Endgeräte (mobile-terminated small data transmission indication) trägt, wobei die Angabe zur Small-Data-Übertragung für mobile Endgeräte dazu verwendet wird, das Benutzergerät anzuweisen, wenn sich das Benutzergerät in einem RRC-inaktiven Zustand (RRC inactive state) befindet, einen entsprechenden Zielträger (target bearer) zu aktivieren;
b) Aktivieren (S303) eines entsprechenden Zielträgers basierend auf der Angabe zur Small-Data-Übertragung für mobile Endgeräte, wobei sich das Benutzergerät in einem RRC-inaktiven Zustand befindet;
c) Senden (S304) einer Paging-Antwortnachricht an die Netzwerkvorrichtung; und
d) Empfangen (S305), basierend auf dem Zielträger, eines ersten Downlink-Datenpakets, das von der Netzwerkvorrichtung gesendet wird, wenn sich das Benutzergerät in dem RRC-inaktiven Zustand befindet.

9. Das Datenübertragungsverfahren nach Anspruch 8, wobei die erweiterte Paging-Nachricht ferner eine Trigger-Angabe und eine Empfangsangabe trägt, wobei die Trigger-Angabe dazu verwendet wird, das Benutzergerät anzuweisen, beim Empfang der erweiterten Paging-Nachricht keine RRC-Wiederaufnahme-Anforderungsnachricht (RRC resume request message) an die Netzwerkvorrichtung zu senden, und die Empfangsangabe dazu verwendet wird, das Benutzergerät anzuweisen, im RRC-inaktiven Zustand das von der Netzwerkvorrichtung gesendete erste Downlink-Datenpaket zu empfangen.

10. Das Datenübertragungsverfahren nach Anspruch 8 oder 9, wobei die Netzwerkvorrichtung das erste Downlink-Datenpaket unter Verwendung einer Downlink-Media-Access-Control-Schicht-Protokolldateneinheit (downlink media access control layer protocol data unit) an das Benutzergerät sendet, wobei die Downlink-Media-Access-Control-Schicht-Protokolldateneinheit ferner eine Media-Access-Control-Schicht-Steuereinheit trägt, und die Media-Access-Control-Schicht-Steuereinheit dazu konfiguriert ist, das Benutzergerät anzuweisen, nach dem Empfang der erweiterten Paging-Nachricht und wenn sich das Benutzergerät in dem RRC-inaktiven Zustand befindet, die RRC-Wiederaufnahme-Anforderungsnachricht nicht an die Netzwerkvorrichtung zu senden und im RRC-inaktiven Zustand das von der Netzwerkvorrichtung gesendete erste Downlink-Datenpaket direkt zu empfangen.

11. Das Datenübertragungsverfahren nach einem der Ansprüche 8 bis 10, wobei der RRCinaktive Zustand einen ersten RRC-inaktiven Zustand und einen zweiten RRC-inaktiven Zustand umfasst, und wobei sich das Benutzergerät beim Senden der Paging-Antwortnachricht an die Netzwerkvorrichtung in dem ersten RRC-inaktiven Zustand befindet, und wobei das Verfahren ferner umfasst:
Starten eines Small-Datenpaket-Timers; und
wenn der Small-Datenpaket-Timer abläuft, Deaktivieren des Zielträgers und Migrieren des Benutzergeräts von dem ersten RRC-inaktiven Zustand in den zweiten RRC-inaktiven Zustand.

12. Das Datenübertragungsverfahren nach einem der Ansprüche 8 bis 11, wobei das Verfahren ferner umfasst:
Empfangen eines zweiten Downlink-Datenpakets; und
falls das zweite Downlink-Datenpaket nicht einem voreingestellten Empfangsszenario entspricht, oder/und
Senden eines Uplink-Datenpakets an die Netzwerkvorrichtung, und falls das Uplink-Datenpaket nicht dem voreingestellten Empfangsszenario entspricht, Senden der RRC-Wiederaufnahme-Anforderungsnachricht an die Netzwerkvorrichtung, sodass das Benutzergerät vom RRC-inaktiven Zustand in einen RRC-verbundenen Zustand übergeht, wobei
der Zeitpunkt für den Empfang des ersten Downlink-Datenpakets durch das Benutzergerät früher ist als der Zeitpunkt für den Empfang des zweiten Downlink-Datenpakets und das Senden des Uplink-Datenpakets durch das Benutzergerät.

13. Das Datenübertragungsverfahren nach Anspruch 12, wobei das Nicht-Entsprechen des zweiten Downlink-Datenpakets dem voreingestellten Empfangsszenario, oder/und das Nicht-Entsprechen des Uplink-Datenpakets dem voreingestellten Empfangsszenario umfasst:
das zweite Downlink-Datenpaket ein Nicht-Kleindatenpaket ist, oder/und
das Uplink-Datenpaket ein Nicht-Kleindatenpaket ist, oder/und
eine Menge der zweiten Downlink-Datenpakete größer als ein Mengenschwellenwert ist, oder/und
eine Menge der Uplink-Datenpakete größer als ein Mengenschwellenwert ist, oder/und
eine Größe des zweiten Downlink-Datenpakets größer als ein Größenschwellenwert ist, oder/und
eine Größe des Uplink-Datenpakets größer als ein Größenschwellenwert ist.

14. Das Datenübertragungsverfahren nach einem der Ansprüche 8 bis 13, wobei die erweiterte Paging-Nachricht ferner eine Trägeridentität mitführt, sodass das Benutzergerät den entsprechenden Zielträger basierend auf der Trägeridentität und der Anzeige für die Übertragung kleiner Datenpakete bei mobilen Endgeräten aktiviert.

## Revendications

1. Procédé de transmission de données, appliqué à un dispositif réseau, dans lequel le procédé comprend :
a) la réception (S301) d'un premier paquet de données de liaison descendante ;
b) si le premier paquet de données de liaison descendante répond à un scénario de transmission prédéfini, l'envoi (S302) d'un message de radiomessagerie amélioré à un équipement utilisateur, dans lequel
c) le message de radiomessagerie amélioré transporte une indication de transmission de petites données terminée par mobile, dans laquelle l'indication de transmission de petites données terminée par mobile est utilisée pour indiquer à l'équipement utilisateur, lorsque l'équipement utilisateur est dans un état inactif de contrôle des ressources radio, RRC, d'activer un support cible correspondant ; et
d) la réception (S304) d'un message de réponse de radiomessagerie envoyé par l'équipement utilisateur, et l'envoi (S305) du premier paquet de données de liaison descendante à l'équipement utilisateur sur le support cible activé lorsque l'équipement utilisateur est dans l'état inactif RRC ; et
e) dans lequel le scénario de transmission prédéfini comprend l'une quelconque des conditions suivantes : le paquet de données de liaison descendante est un petit paquet de données, le paquet de données de liaison descendante est dans une liste de transmission de petites données terminée par mobile prédéfinie dans le dispositif réseau, ou le paquet de données de liaison descendante transporte des informations d'indication correspondantes et les informations d'indication sont utilisées pour indiquer si une transmission de petites données terminée par mobile est déclenchée pour le paquet de données de liaison descendante.

2. Procédé de transmission de données selon la revendication 1, dans lequel le message de radiomessagerie amélioré transporte en outre une indication de déclenchement et une indication de réception, l'indication de déclenchement est utilisée pour indiquer à l'équipement utilisateur de ne pas envoyer de message de demande de reprise RRC au dispositif réseau lors de la réception du message de radiomessagerie amélioré, et l'indication de réception est utilisée pour indiquer à l'équipement utilisateur de recevoir, dans l'état inactif RRC, le premier paquet de données de liaison descendante envoyé par le dispositif réseau.

3. Procédé de transmission de données selon la revendication 1 ou 2, dans lequel le dispositif réseau envoie le premier paquet de données de liaison descendante à l'équipement utilisateur en utilisant une unité de données de protocole de couche de contrôle d'accès au support de liaison descendante, dans lequel l'unité de données de protocole de couche de contrôle d'accès au support de liaison descendante transporte une unité de contrôle de couche de contrôle d'accès au support, et l'unité de contrôle de couche de contrôle d'accès au support est configurée pour indiquer à l'équipement utilisateur, après réception du message de radiomessagerie amélioré et lorsque l'équipement utilisateur est dans l'état inactif RRC, de ne pas envoyer le message de demande de reprise RRC au dispositif réseau, et de recevoir directement, dans l'état inactif RRC, le premier paquet de données de liaison descendante envoyé par le dispositif réseau.

4. Procédé de transmission de données selon l'une quelconque des revendications 1 à 3, dans lequel le message de radiomessagerie amélioré transporte en outre une identité de support, de sorte que l'équipement utilisateur active le support cible correspondant sur la base de l'identité de support et de l'indication de transmission de petites données terminée par le mobile.

5. Procédé de transmission de données selon l'une quelconque des revendications 1 à 4, dans lequel le procédé comprend en outre :
la réception d'un second paquet de données de liaison descendante à envoyer à l'équipement utilisateur, et si le second paquet de données de liaison descendante ne répond pas au scénario de transmission prédéfini, ou/et
la réception d'un paquet de données de liaison montante envoyé par l'équipement utilisateur, et si le paquet de données de liaison montante ne répond pas au scénario de transmission prédéfini, l'envoi d'un message de reprise RRC à l'équipement utilisateur, de sorte que l'équipement utilisateur migre de l'état inactif RRC vers un état connecté RRC, dans lequel
le temps de réception du premier paquet de données de liaison descendante par le dispositif de réseau est antérieur au temps de réception du second paquet de données de liaison descendante et du paquet de données de liaison montante par le dispositif de réseau.

6. Procédé de transmission de données selon la revendication 5, dans lequel un procédé pour déterminer que le second paquet de données de liaison descendante ne répond pas au scénario de transmission prédéfini, et/ou que le paquet de données de liaison montante ne répond pas au scénario de transmission prédéfini comprend :
le second paquet de données de liaison descendante est un paquet de données non petites, ou/et
le paquet de données de liaison montante est un paquet de données non petites, ou/et
une quantité des seconds paquets de données de liaison descendante est supérieure à un seuil de quantité, ou/et
une quantité des paquets de données de liaison montante est supérieure à un seuil de quantité, ou/et
une taille du second paquet de données de liaison descendante est supérieure à un seuil de taille, ou/et
une taille du paquet de données de liaison montante est supérieure à un seuil de taille.

7. Procédé de transmission de données selon l'une quelconque des revendications 1 à 6, dans lequel, lors de l'envoi du premier paquet de données de liaison descendante à l'équipement utilisateur, le procédé comprend en outre :
la détermination que le premier paquet de données de liaison descendante est un paquet de données unique ; ou
le démarrage, par le dispositif de réseau, d'une minuterie de petites données lors de l'envoi du premier paquet de données de liaison descendante à l'équipement utilisateur, et si la minuterie de petites données expire et qu'aucun nouveau paquet de données de liaison descendante à envoyer à l'équipement utilisateur n'est reçu,
l'envoi d'un message de libération RRC à l'équipement utilisateur.

8. Procédé de transmission de données, appliqué à un équipement utilisateur, dans lequel le procédé comprend :
a) réception (S302) d'un message de radiomessagerie amélioré envoyé par un équipement réseau, dans lequel le message de radiomessagerie amélioré transporte une indication de transmission de petites données terminée par le mobile, dans lequel l'indication de transmission de petites données terminée par le mobile est utilisée pour indiquer à l'équipement utilisateur, lorsque l'équipement utilisateur est dans un état inactif de contrôle des ressources radio, RRC, d'activer un support cible correspondant ;
b) activation (S303) d'un support cible correspondant sur la base de l'indication de transmission de petites données terminée par le mobile, et l'équipement utilisateur est dans un état inactif RRC ;
c) envoi (S304) d'un message de réponse de radiomessagerie à l'équipement réseau ; et
d) réception (S305), sur la base du support cible, d'un premier paquet de données de liaison descendante envoyé par l'équipement réseau lorsque l'équipement utilisateur est dans l'état inactif RRC.

9. Procédé de transmission de données selon la revendication 8, dans lequel le message de radiomessagerie amélioré transporte en outre une indication de déclenchement et une indication de réception, l'indication de déclenchement étant utilisée pour indiquer à l'équipement utilisateur de ne pas envoyer de message de demande de reprise RRC à l'équipement réseau lors de la réception du message de radiomessagerie amélioré, et l'indication de réception étant utilisée pour indiquer à l'équipement utilisateur de recevoir, dans l'état inactif RRC, le premier paquet de données de liaison descendante envoyé par l'équipement réseau.

10. Procédé de transmission de données selon la revendication 8 ou 9, dans lequel l'équipement réseau envoie le premier paquet de données de liaison descendante à l'équipement utilisateur en utilisant une unité de données de protocole de couche de contrôle d'accès au support de liaison descendante, dans lequel l'unité de données de protocole de couche de contrôle d'accès au support de liaison descendante transporte en outre une unité de contrôle de couche de contrôle d'accès au support, et l'unité de contrôle de couche de contrôle d'accès au support est configurée pour indiquer à l'équipement utilisateur, après réception du message de radiomessagerie amélioré et lorsque l'équipement utilisateur est dans l'état inactif RRC, de ne pas envoyer le message de demande de reprise RRC à l'équipement réseau, et de recevoir directement, dans l'état inactif RRC, le premier paquet de données de liaison descendante envoyé par l'équipement réseau.

11. Procédé de transmission de données selon l'une quelconque des revendications 8 à 10, dans lequel l'état inactif RRC comprend un premier état inactif RRC et un second état inactif RRC, et lors de l'envoi du message de réponse de radiomessagerie à l'équipement réseau, l'équipement utilisateur est dans le premier état inactif RRC, et le procédé comprend en outre :
le démarrage d'un minuteur de petits paquets de données ; et
si le minuteur de petits paquets de données expire, la désactivation du support cible et la migration de l'équipement utilisateur du premier état inactif RRC vers le second état inactif RRC.

12. Procédé de transmission de données selon l'une quelconque des revendications 8 à 11, dans lequel le procédé comprend en outre :
la réception d'un second paquet de données de liaison descendante ; et
si le second paquet de données de liaison descendante ne répond pas à un scénario de réception prédéfini, ou/et
l'envoi d'un paquet de données de liaison montante au dispositif de réseau, et si le paquet de données de liaison montante ne répond pas au scénario de réception prédéfini, l'envoi du message de demande de reprise RRC au dispositif de réseau, de sorte que l'équipement utilisateur migre de l'état inactif RRC à un état connecté RRC, dans lequel
le temps de réception du premier paquet de données de liaison descendante par l'équipement utilisateur est antérieur au temps de réception du second paquet de données de liaison descendante et d'envoi du paquet de données de liaison montante par l'équipement utilisateur.

13. Procédé de transmission de données selon la revendication 12, dans lequel le fait que le second paquet de données de liaison descendante ne répond pas au scénario de réception prédéfini, ou/et le fait que le paquet de données de liaison montante ne répond pas au scénario de réception prédéfini comprend :
le second paquet de données de liaison descendante est un paquet de données non petit, ou/et
le paquet de données de liaison montante est un paquet de données non petit, ou/et
une quantité de seconds paquets de données de liaison descendante est supérieure à un seuil de quantité, ou/et
une quantité de paquets de données de liaison montante est supérieure à un seuil de quantité, ou/et
une taille du second paquet de données de liaison descendante est supérieure à un seuil de taille, ou/et
une taille du paquet de données de liaison montante est supérieure à un seuil de taille.

14. Procédé de transmission de données selon l'une quelconque des revendications 8 à 13, dans lequel le message de radiomessagerie amélioré transporte en outre une identité de support, de sorte que l'équipement utilisateur active le support cible correspondant sur la base de l'identité de support et de l'indication de transmission de petites données terminée par mobile.
